(19)

Europäisches
Patentamt
European
Patent Office
Office européen
des brevets

(11)  **EP 1 610 503 B1**

(12)  **EUROPEAN PATENT SPECIFICATION**

(45) Date of publication and mention
of the grant of the patent:
**18.05.2011  Bulletin 2011/20**

(51) Int Cl.:
*H04L 12/56* (2006.01)

(21) Application number: **04425464.7**

(22) Date of filing: **25.06.2004**

(54) **Controlling routing operations in communication networks**

Steuerung von Weiterleitung in Kommunikationsnetzen

Contrôle d'acheminement dans des réseaux de communication

(84) Designated Contracting States:
**AT BE BG CH CY CZ DE DK EE ES FI FR GB GR
HU IE IT LI LU MC NL PL PT RO SE SI SK TR**

(43) Date of publication of application:
**28.12.2005  Bulletin 2005/52**

(73) Proprietor: **Nokia Siemens Networks S.p.A.
20060 Cassina de'Pecchi (MI) (IT)**

(72) Inventors:
• **Coletti, Luca
32044 Pieve di Cadore, (BL)
20129 Milano (IT)**
• **Zambardi, Marco
20060 Cassina de'Pecchi (IT)**
• **Capone, Antonio
20129 Milano (IT)**

(74) Representative: **Weidel, Gottfried et al
Nokia Siemens Networks GmbH & Co. KG
COO RTP IPR / Patent Administration
80240 München (DE)**

(56) References cited:
WO-A-03/028315        US-A- 5 872 773
US-A1- 2001 006 522   US-A1- 2002 080 790
US-A1- 2002 145 978   US-A1- 2003 202 476

• F. BORGONOVO, L. CAMPELLI, M. CESANA, L.
COLETTI: "MAC FOR AD-HOC INTER-VEHICLE
NETWORK: SERVICES AND PERFORMANCE"
IEEE VEHICULAR TECHNOLOGY
CONFERENCE, 6 October 2003 (2003-10-06),
pages 1-5, XP002309070
• L. COLETTI, N. RIATO, A. CAPONE, L. FRATTA:
"Architectural and technical aspects for Ad Hoc
Networks based on UTRA TDD for Inter-Vehicle
communication" 12TH SUMMIT ON MOBILE AND
WIRELESS COMMUNICATIONS, 15 June 2003
(2003-06-15), pages 1-5, XP002309071 AVEIRO,
PORTUGAL
• ANTONIO CAPONE, LUCA COLETTI, MARCO
ZAMBARDI: "QoS Routing in Multi-hop Wireless
Networks: a New Model and Algorithm"
INTERNET, [Online] 12 February 2004
(2004-02-12), pages 1-14, XP002309068
INTERNET [retrieved on 2004-12-01]
• ANON: "Routing and scheduling in multi-hop
wireless networks" INTERNET, [Online] 12
February 2004 (2004-02-12), pages 1-2,
XP002309069 INTERNET Retrieved from the
Internet: URL:www.elet.polimi.it/upload/antlab/
RESEA RCH/WIRELESS-ROUTING/> [retrieved
on 2004-12-01]

EP 1 610 503 B1

**Description**

<u>Field of the invention</u>

The present invention relates to techniques for controlling routing operations in communication networks, and was developed by paying specific attention to the possible application to wireless multi-hop networks including fixed/movable (i.e. displaceable) relays.

However, reference to this preferred area of application is not to be construed in a limiting sense of the scope of the invention.

<u>Description of the related art</u>

By way of general introduction to the area of the invention, it may be observed that in recent years, one of the hottest areas of research in communication networks is the MANET (Mobile Ad-hoc NETwork).

The main features of this new type of network can be summarized as follows.

- No infrastructure: no needs exists for a network infrastructure, and operations are established in a self-organizing manner.
- No administration: administration of an ad-hoc network is ensured in an autonomous fashion by each terminal and, hence, no maintenance costs arise.
- Distributed arrangement: network control and database functions are distributed over all terminals in the network or a dedicated subset of terminals.
- Multi-hop: end-to-end paths using multiple terminals as relay stations can be established to provide a connection between two distinct nodes.
- Wireless: the terminals use a wireless interface to communicate with each other.
- Mobile: the network may consist of mobile/fixed terminals only (i.e. without base stations).

Ad-hoc networks can be described as self-creating, self-organizing and self-administering, applying the paradigm of networking "any time, anywhere".

An extensive survey of ad-hoc networks and related routing protocols can be found in the following papers:

- S. Krco, F. Fitzed, "Ad-Hoc Networking" WWRF/WG4 Ad-hoc Networking Subgroup White paper 2003;
- S. Giordano, I. Stojmenovic, L. Blazevic, "Position based routing algorithms for ad hoc networks: a taxonomy in Ad Hoc Wireless Networking", X. Cheng, X. Huang and D.Z. Du (eds.), Kluwer, 2003;
- M.T. Islam, P. Thulasiraman and R.K. Thulasiram, "A parallel and colonization algorithm for all-pair routing in MANETs", IEEE Proceedings of the international parallel and distributed processing symposium, 2003,
- M. Minematsu et al. Howl, "An efficient route discovery scheme using routing history in ad-hoc networks", IEEE Proceedings of the 27th annual conference on local computer network, 2002;
- S. Roy, J.J. Garcia-Luna-Aveces, "Using minimal source trees for on-demand routing in ad-hoc networks", in IEEE Infocom, Anchorage, Alaska, 2001;
- I. Rubin et al. TBONE, "A mobile-backbone protocol for ad-hoc wireless networks", IEEE Aerospace Conference Proceedings, 2002, Volume: 6, Pages 2727 - 2740;
- M. Spohn, J.J. Garcia-Luna-Aveces, "Neighborhood aware source routing", MobiHOC, Long Beach CA, 2001.
- J. Tian, L. Han, K. Rothermel, "Spatially aware routing for mobile ad-hoc inter-vehicle radio networks", in IEEE 6th International Conference on Intelligent Transportation Systems (ITSC), Shanghai, China, October 12-15, 2003;
- X. Cheng, D. Du, "Virtual backbone-based routing in multi-hop ad-hoc wireless networks", Technical Report 02-002, submitted to IEEE Transactions on Parallel and Distributed Systems;
- M. Gerla, T.J. Kwon, G. Pei, "On demand routing in large ad-hoc wireless networks with passive clustering", Proceedings of IEEE WCNC, Chicago IL, Sep. 2000;
- H. Li, D. Yu, "Performance Comparison of ad-hoc and cellular based routing algorithms in multi-hop cellular networks", IEEE WPMC 2002, October 2002.

While proving to be quite useful in a wide variety different scenarios, thanks to their versatility in terms of deployment and maintenance, Ad-hoc networks still present a number of unsolved issues, such as Quality of Services (QoS) provisioning to the supported connection. Quality of Service aims at guaranteeing that a given connection between a source and a destination will be able to transmit with throughput, delay, and bandwidth characteristics satisfying certain requirements (e.g. having a delay lower than a few milliseconds or a reserved bandwidth in excess of a thousand of Kbit/s may be mandatory requirements for audio/video streaming services).

The intrinsic nature of ad-hoc networks, i.e. the absence of any kind of centralized coordination, and the recurrent changes in network topology, due to terminals mobility, makes it very difficult to offer an acceptable Quality of Service in such networks.

The reasons for this inability can be traced both at the routing level and at the Medium Access Control (MAC) level.

In the case of the routing level, the main reasons are:

- the routing latency and overhead introduced by the distributed search of route;
- the frequent route breakdown due to terminals mobility that introduce delay and routing overhead for repairing (that however may be not possible);
- the impossibility of setting down a route with a global vision of the load already present in the network; this oftentimes leads to overloading certain terminals with a consequent loss of packets or high delays due to buffering.

The limitations at Medium Access Control level are even more challenging.

In fact, while having to be completely distributed, channel access operates over a physical channel that, unlike the Ethernet, does not exhibit broadcast characteristics with all the terminals that can potentially collide with the transmitting station (the "hidden terminal" problem).

Different works exist that discuss Quality of Service routing for wireless ad-hoc networks: all these prior art arrangements are based on very different hypotheses, scenario and solving approach with respect to arrangement herein described. Specifically, they are based on following assumptions: completely distributed algorithms, terminals mobility, problem of power consumption and in general Carrier-Sense Multiple Access (CSMA) type MAC layer.

Approaches such as the Carrier Sense Collision Avoidance, adopted in the Distributed Coordination Function of IEEE 802.11, do not completely solve the problem. Furthermore, no centralized algorithm, such as the Point Coordination Function of IEEE 802.11, can be applied within the context considered, thus making it quite difficult to provide services with Quality of Service requirements, such as voice traffic.

In fact, certain Quality of Service routing protocols have been proposed for ad-hoc networks: however, these appear to be extremely complex.

Previous studies in this area include the following papers.

- S. Chakrabarti, A. Mishra, "QoS issues in ad-hoc wireless networks", IEEE Communications Magazine, February 2001;
- C. R. Lin, J. S. Liu, "QoS routing in ad-hoc wireless networks", IEEE Journal On Selected Areas In Communications, vol.17, no.8, August 1999;
- C.Zhu, M. S. Corson, "QoS routing for mobile ad-hoc networks", IEEE INFOCOM, 2002;
- S. Chen, K. Nahrstedt, "Distributed quality of service routing in ad-hoc networks", IEEE Journal On Selected Areas In Communications, vol.17, no.8, August 1999.

New network architectures have been recently investigated with the aim of offering a degree of Quality of Service in line with QoS performance offered by current GSM networks while retaining certain advantages of ad-hoc networks (specifically, wireless multi-hop and "anytime, everywhere" connection). A common feature of these new architectures is the integration of existing GSM/UMTS/satellite infrastructures with ad-hoc networks and new radio-elements, such as Access Points (APs) and relays, intended to extend the radio coverage and capacity of the former infrastructures.

These new architectures are currently referred to as "beyond 3G" networks. Various different examples of these new arrangements are described in the following papers:

- Ananthapadmanabha R., B. S. Manoj, C. Siva Ram Murthy, "Multi-hop cellular networks: the architecture and routing protocols", Proc. PIMRC, 2001;
- I. F. Akyildiz, W. Yen, B. Yener, "A new hierarchical protocol for dynamic multi-hop wireless networks", Proc. IEEE INFOCOM, April 1997;
- Y. D. Lin, Y. C. Hsu, "Multi-hop cellular: a new architecture for wireless communication", IEEE INFOCOM, 2000;
- H. Li, M. Lott, M. Weckerle, W. Zirwas, E. Schulz, "Multi-hop communications in future mobile radio networks", WPMC, October 2002;
- M. Lott, M. Weckerle, W. Zirwas, H.Li, E, Schulz, "Hierarchical Cellular Multi-hop Networks", EPMCC, March 2003;
- H. Lou et al, "UCAN: a unified cellular and ad-hoc network architecture", MobiCom, San Diego CA, September 14-19,2003;
- M. J. Miller, W. D. List, N. H. Vaidya, "A hybrid network implementation to extend infrastructure reach", Tech Report 2003, University of Illinois at Urbana-Champaign;

- C. Qiao, H. Wu, "iCAR: an integrated cellular and ad-hoc relay system", Intel Conf. on Computer Communications and Networks (IC3N), Las Vegas NV, Oct 2000;
- R. B. Walke et al, "Relay-based deployment concepts for wireless and mobile broadband cellular radio", Paper proposal for IEEE communications magazine, version 1.1, August 2003;
- C.H. Yeh, "ACENET: architectures and protocols for high throughput, low power, and QoS provisioning in next-generation mobile communications", Proc. IEEE Intel Symp. Personal, Indoor, and Mobile Radio Communications (IEEE PIMRC'02), Sep. 2002, pp. 779-786;
- B. H. Walke, R. Pabst, D. Schultz, "A mobile broadband system based on fixed wireless routers", Proceedings of ICCT, 2003;
- A. N. Zadeh et al, "Self-organizing packet radio ad-hoc networks with overlay", IEEE Communications Magazine, June 2002;

US 2003/0202476 discloses a mechanism for providing route determination for multihop routes in a mobile ad hoc network that ensures quality of service constraints. This is achieved by intermediate nodes, between a source and destination node, determining whether they can support a quality of service requirement requested by the source node and if so updating a quality of service link metric transmitted in a route request by the source node.

WO 03/028315 discloses a mechanism for multihop routing in a wireless network. This is achieved by establishing a multihop route through the wireless network, altering transmission protocol parameters in order to minimise delays for packet transmission and then transmitting packets over the route according to the altered transmission protocol parameters.

US 2002/0145978 discloses a mechanism for routing using MultiPoint Relaying techniques in mobile ad hoc networks. This is achieved by nodes within a network exchanging information with their neighbours in order to create lists showing the number of hops a particular node is distant from another node. Based on information contained in the lists, then forwarding data traffic in the network.

US 2002/080790 discloses a mechanism for transferring data packets in a network, wherein data packets are transferred at a regulated bit rate. This is achieved by defining a protocol that uses an adaptive packet header to simplify packet routing and increase packet transfer speed.

US 2001/006522 discloses a flexible distributed switch adapted for wide geographical coverage which provides grade-of-service and quality-of-service control while maintaining a high end-to-end capacity. The switch is constructed from packet-switching edge modules and channel-switching core modules and traffic is sorted at each ingress edge module according to egress edge module.

US 5,872,773 discloses a mechanism for routing cells in a wireless communications network. This is achieved by routing according to destination-rooted virtual path identifier (VPI) trees. Virtual path identifier trees are determined at each destination node and a routing protocol manages the routes of these trees, while ensuring that there are at least two VPI trees from each source to each destination for reliability reasons, and that each destination node has multiple VPI trees for load-balancing reasons.

In recent years, an upsurge of interest can be traced both in industry and in the academic world in respect of multi-hop-augmented infrastructure-based networks. Exemplary of this area of investigation is the "seed" concept in Third Generation Partnership Project (3GPP), Mesh Networks in IEEE 802.16, coverage extension of HyperLAN/2 through Relays or user-cooperative diversity mesh networks.

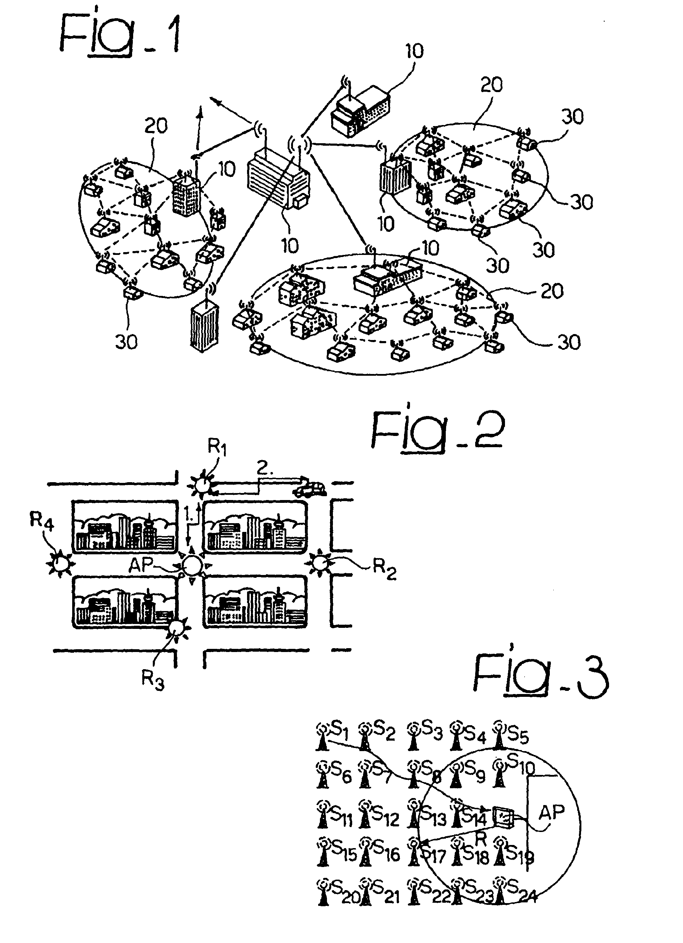

Figure 1 shows a typical example of such a mesh topology network. There, reference numerals 10 indicate elements, such as base stations (BSs), access points (APs) or the like adapted to serve indicates mesh sub-networks 20. Nodes indicated 30 are present within the mesh sub-networks. Transmissions from/to the elements 10 are represented by continuous lines, while transmissions within mesh sub-networks 20 are represented by dotted lines. It will be appreciated that the elements 10 do not generally provide direct coverage of all the elements include in a given sub-network 20, and communication takes place in the form of multi-hop transmission relayed within the sub-network.

A mesh topology can be defined as a topology including at least two nodes with two or more paths between them. More precisely, a mesh topology is defined as a topology wherein packets do not necessarily go through an element such as a base station (BS), but can also adopt direct routing if a path from source to destination exists within the network.

Different approaches have exploited the benefits of multi-hop communications via fixed and/or mobile relays: exemplary of these are solutions for radio range extension in mobile and wireless broadband cellular networks (trading range for capacity).

Further, relaying is presented as a way to reduce infrastructure deployment costs. Specifically, multi-hop relaying is known as capable of enhancing capacity in cellular networks, e.g. through the exploitation of spatial diversity.

The very high data rates envisioned for Fourth Generation (4G) wireless systems in reasonably large areas do not appear to be feasible with the conventional cellular architecture due to two basic reasons.

Firstly, the transmission rates envisioned for 4G systems may be two orders of magnitude higher than the transmission rates of 3G systems, and it is well known that for a given transmit power level, the energy per symbol (and thus the energy per bit) decreases linearly with the increasing transmission rate.

Secondly, the spectrum expected to be released for 4G systems will be located well above the 2 GHz band used by 3G systems. In order to receive the transmitted signals successfully, propagation of electromagnetic waves in these higher bands almost necessarily occurs in line-of-sight conditions. This is in contrast to non-line-of-sight conditions, which today represent the typical mode of operation in urban cellular communications.

A brute-force solution to this problem is to significantly increase the density of the basic elements 10. This results in considerably higher deployment costs that would be acceptable only if the number of subscribers were to increase at the same rate: an unlikely event in view of the massive penetration of cellular phones in developed countries.

On the other hand, with the evolution of services offered, it is to be expected that the same number of subscribers will have a much higher demand in terms of transmission rates: this will cause the aggregate throughput rate to become the bottleneck of future wireless systems. Moreover, it is reasonable to assume that subscribers will not be willing to pay the same amount of money per data bit as for voice bits. Consequently, a drastic increase in the number of base stations does not seem economically justifiable.

As an additional issue, only bi-directional amplifiers have been used in Second Generation (2G) systems and will be introduced for 3G systems. Yet, these analogue repeaters increase the noise level and they suffer from the danger of instability due to their fixed gain, which has limited their application to specific scenarios. Most standardized systems existing today were designed for bi-directional communication between a central base station and mobile stations directly linked thereto. The additional communication traffic between a mobile terminal and a relay interposed in a link between a mobile terminal and a base station requires the allocation of additional radio resources: this is one of the reasons that hitherto have hindered the deployment of smart relay concepts.

Quite substantial improvements are thus required in order to meet the very ambitious throughput and coverage requirements of future systems. For that purpose, in addition to advanced transmission techniques and co-located antenna technologies, some major modifications in the wireless network architecture itself are required that will enable effective distribution and collection of signals to and from wireless users.

In that respect, the possible integration of multi-hop capability with conventional wireless networks represents a most promising architectural upgrade.

Specifically, the application of multi-hop networking in wide area cellular systems yields a number of significant benefits.

Compared with ad-hoc networks, networks applying relaying via fixed infrastructure do not require complicated distributed routing algorithms, while preserving the advantage of being able to move the relays as the traffic patterns change over time. In comparison with basic elements such as base stations, access points, and the like, relays are low-cost, low transmit power network elements. More to the point, relays do not require connection to a wired "backhaul", dedicated to storing and forwarding data received over a wireless channel from a basic element to the user terminals coming down to it and vice-versa or even to storing and forwarding data received from one relay to another relay, mesh relay topologies will allow to set connection without pass through BS.

Additionally, the possibility exists of reducing the propagation losses between the relay transmitters and BS/ user terminals or between two relays. This results in larger link data rates and potentially solves the coverage problem for high data rates in larger cells. The possibility of having simultaneous transmissions by both the base station and the relays leads to capacity gains achieved by either exploiting reuse efficiency or spatial diversity.

Figures 2 and 3 show notional examples of relay implementations adapted to highlight the benefits in terms of performance that multi-hop relaying can provide in broadband networks when applied in certain scenarios.

Specifically, Figure 2 shows a city scenario with one Access Point (AP) serving the white area and four Relay Stations $RS_1$, $RS_2$, $RS_3$, and $RS_4$ covering the shadowed areas "around the corners".

Figure 3 shows the coverage area of an Access Point (AP) over a set of nodes $S_1$ to $S_{24}$. The nodes that are in the circle with radius R are within the reach of the Access Point, and when the Access Point transmits a message, any node in this area is in position to receive that message.

One of the most critical problems in finding a feasible connection path within a scenario as exemplified in figures 2 and 3 lies in that transmissions are de facto local broadcast transmissions. This is quite a significant point when wishing to provide Quality of Service routing in wireless networks comprised of nodes that use omni directional antennas.

In a wired network, the possibility exists of distinguishing what happens in every single in-coming or out-going link of a node. Conversely, in a wireless network it is necessary to take into account all the wireless links belonging to a node as one.

More to the point, in a network such as a wired network, transmission from node "k" to node "j" will affect only link "k" towards "j" with no impact on any other in-coming or out-going links of node "k" or node "j". Conversely, in a wireless network, due to the shared media, when node "k" transmits to node "j", the radio signal reaches not only node "j" but also all the other nodes within the radio coverage of node "k". This provokes in these latter nodes a waste of bandwidth: in fact, while receiving no useful signal, these nodes see their channel busy in the meanwhile, i.e. they cannot transmit or receive any useful signal.

Additionally, in order to compute the bandwidth exploited by a transmission in a wireless network, one needs to take into account not just the one-hop cluster of a given node, i.e. all the nodes in its radio coverage (i.e. the so-called "neighbourhood"), but also the two-hop cluster, i.e. all the nodes reachable via two hops. That is evidently intended to avoid setting up a route that will generate collision or overload due to the hidden/exposed terminal problem.

Furthermore, in order to be truly efficient, any routing technique should route the connection in the best way possible, i.e. using in the most efficient way the global resources of the network by maximizing the number of routes admitted while in the meanwhile avoiding congestion and guaranteeing the requested Quality of Service.

Routing protocols are known in the art that try to offer QoS in wireless network use some form of slotted MAC layer, typically TDMA, and strictly entwine the route searching operations with the definition of scheduling at MAC level: searching and setting up of a feasible route for a given connection would thus keep pace with the slot assignment function, so a node is selected to be part of a new route only if it is possible to insert its transmission and reception in a proper scheduling, and this is last condition is controlled next hop by next hop.

In current prior art solutions the routing arrangement should detain the information related to the time slots yet assigned to each node in the network and the time slots still free to be assigned: when searching for a feasible route, a given node "j" is selected as a part of the route if and only if it has sufficient time slots to re-transmit the packets of the new flow and if it has a neighbour adapted - in turn - to be its next hop, i.e. a neighbour that can receive the packets on the same time slots and have further time slots free to retransmit these slots if that neighbour is not the destination. The route or path searching algorithm has oftentimes embedded a scheduling algorithm, so that time slots assignment change in trying to route the new flow.

Irrespective of any other remarks, such arrangements fail to fully exploit the transmission capabilities of the network.

Object and summary of the invention

Specifically, the invention can be applied to controlling routing operations in a network including nodes configured for multihop communication in the form of independent connections over wireless links connecting the nodes in the network, wherein each node has a set of neighbouring nodes and transmissions from a given node directed to a targeted neighbouring node are received also by at least one non-targeted neighbouring node.

The objective of the invention is to provide a fully satisfactory response to the needs outlined in the foregoing while dispensing with the intrinsic shortcomings and drawbacks of prior art arrangements.

According to the present invention, that object is achieved by means of a method having the features set forth in the claims that follow. The invention also relates to a corresponding system, a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

A preferred embodiment of the invention thus implements a new routing arrangement in a network of fixed/ movable radio relays, i.e. including nodes/terminals that are in fixed position or that could be moved from a fixed position to a new fixed position. Routing is optimised for supporting multi-hop transmission and for guaranteeing Quality of Service with respect e.g. to bandwidth and delay constraints, i.e. the arrangement described herein is able to ensure the bandwidth requested to each connection admitted in the network while keeping the end-to-end delay as low as possible.

The arrangement described herein tackles the problem of providing Quality of Service routing by maintaining the route-searching phase distinct from the scheduling (slot assignment) phase that should be done if some form of slotted MAC is in use. In that way, the arrangement described herein no longer exhibits the limitations of prior art Quality of Service routing protocols using a Time Division Multiple Access (TDMA) MAC layer associated with the scheduling instance and two major advantages are gained: firstly the routing arrangement described herein is completely independent from MAC layer in use that could be either non-slotted as 802.11 or slotted as TDMA, secondly, as best overall network performances are achieved if a slotted MAC layer is in use, the arrangement described herein, without requiring any specific information about time slot assignment in any case guarantees both the required Quality of Service to each flow admitted and the existence of a feasible scheduling.

In brief, the arrangement described herein searches for a feasible route or path taking in account just certain limitations deriving from physical, wireless broadcast and from channel bandwidth without defining any scheduling during routing operation or considering any previous scheduling yet in use at a lower level. Once the routing operation is successfully completed, i.e. a feasible route has been found for the new connection, a scheduling routine is proposed to find, any time a new flow or connection admitted in the network or a connection already admitted is re-routed, a feasible scheduling scheme based on the capacity required by the nodes.

The arrangement described herein guarantees (via the constraints used in searching the routes) that such a scheduling scheme will exist for the flows actually routed in the network.

The arrangement described herein exhibits following, advantageous features:

- centralized method;
- route choice based on global network state and information;
- automatic load balancing through the network;
- full functionalities without any adaptations provided for any MAC layer technologies, anyway best overall network performance achieved using the on purpose developed TDMA mac layer herein described];

The resulting Quality of Service routing method is thus optimised to work in a network including fixed/movable relays or in any network showing similar features, i.e. fixed wireless transceiver equipped with omni-directional antennas using a homogeneous radio interface.

Brief description of the annexed drawings

The invention will now be described, by way of example only, with reference to the enclosed figures of drawing, wherein:

- Figures 1 to 3, that apply per se both to the prior art and to the invention, were already described in the foregoing; and
- Figure 4 shows a flow chart of a routing routine adapted to be implemented in the arrangement described herein.

Detailed description of preferred embodiments of the invention

An exemplary routing arrangement adapted to be implemented in a network scenario of the type described in the foregoing will now be described in detail. Specifically, the arrangement in question is adapted to be implemented at the level of a central entity, that can be a Base Station (BS) or an Access Point (AP) to which the relay network is connected or even on of relay itself that acts as a master relay.

Firstly a definition of fixed/movable relay network is given. A relay network is a collection of fixed/movable transceivers (i.e. nodes) equipped with omni-directional antennas that share the same medium, i.e. all the nodes in the network transmit and receive using homogeneous radio interface (the same carrier and bandwidth). The exemplary case of movable node/relay will be considered here of a node/terminal "j" that is moved from a point A, where it used to stand still, to a point B, where it will again stand still.

These nodes are half-duplex transceiver, i.e. cannot transmit and receive simultaneously: the state of each node in any instant can thus be either active (transmitting) or passive (receiving).

As used herein, the word "receiving" will apply both when the signal received by a node is addressed to it (useful signal) and when the received signal is not addressed to it (useless signal), so that "receiving" or "passive" state will mean that the node is listening to the channel.

Additionally, a node "k" is said to have "j" as neighbour, and so the radio link "k" to "j" is said to exist, if and only if node "j" is in the radio coverage of node "k", i.e. signal transmitted from node "k" are received from node "j".

In general the existence of radio link "k" to "j" does not necessarily imply the existence of radio link "j" to "k". If the radio coverage is the same for each transceiver, then it may be safely assumed that the existence of radio link "k" to "j" also implies the existence of radio link "j" to "k" by the way, this latter conditions is not required by routing arrangement herein described.

Given a node "k", the set of nodes that are neighbours of "k", i.e. that are in the "k" radio coverage, is called the "one-hop" cluster of "k". In other words, the one-hop cluster of a given node comprises all the nodes reachable in one hop from the selected node, i.e. going through one radio link.

Similarly, the "two-hop" cluster of a given node "k" comprises the set of nodes reachable from "k" in one or two hops, i.e. going through one or two different radio link.

The concepts outlined above can be represented introducing a network model. Specifically, it is possible to represent the relay network as a graph $G=(V, E)$ where $V=\{0,1, ... k ... N-1\}$ is the set of vertexes representing the transceiver of the network and E is the set of edges representing the radio link existing in the relay network, the ordered couple $(k, j)$ is in E if and only if node "k" has node "j" as a neighbour, i.e. if and only if exist the radio link "k" to "j".

Based on the formalism introduced in the foregoing, the following definitions are possible:

- One-hop cluster of given node "k":

$$S_1(k) = \{j \in V | (k, j) \in E\}$$

- Two-hop cluster of given node "k":

$$S_2(k) = \{j \in V | (j \in S_1(k)) \vee (\exists 1 \in S_1(k) | j \in S_1(1))\}$$

A flow or connection is defined as the stream of packets sent from a source node "s" to a destination node "d" (these not being necessarily neighbours). A flow/connection is characterized by a requested bandwidth, i.e. the rate in bit/sec used by the source to transmit the packet.

Then, for every node $i$ in V it is defined the set $G_i$ formed by all links that can be reached starting from node $i$ within two hops; i.e. to $G_i$ belong all those links that has node $i$ as one of their end and all those links that has a neighbor of node $i$ as one of their end. This set can be constructed and formalized as follow: firstly it must be introduced the set $S_i^1$ made up by all those links that are adjacent to node $i$, secondly, recalling the definition of set $S_1(i)$ as the set of nodes that are neighbors of given node $i$, it is possible to define, for each node belonging to $S_1(i)$, another set of links made up by all those links that have as one of their end the selected node in $S_1(i)$ and meanwhile do not belong to $S_i^1$, in other words belong to this set all those links that are adjacent to selected node in $S_1(i)$ and that are exactly two hops away from given node i. For each node $j$ in $S_1(i)$ this set is defined as $S_{i,j}^2$. Since we are interested in develop a QoS routing, we should be able to admit in the network only that amount of unit flow that can be transmitted and received along their path without causing collisions. Collisions happen either when a transceiver receives two or more simultaneous signals or when a transceiver is going to transmit and in the meanwhile it receives a signal. In both case there is loss of data since they cannot be correctly received or transmitted and thus there is a significant reduction in Quality of Service provided by the network and also the overall network performances will decrease since very probably retransmissions will be needed. To avoid such situations it is necessary to properly take in account the physical broadcast transmission.

The total amount of units of flow that can be routed over the whole set of links belonging to a given group $G_i$ related to node $i$ is limited both by the amount of flows yet routed on links belonging to set $S\,S_i^1$, i.e. on links adjacent to node $i$, and by the amount of flows routed on links belonging to the various sets $S_{i,j}^2$, i.e. on links exactly two hops away from node $i$. The constraints given individually by the link state of links in $S_i^1$ and of links in the various $S_{i,j}^2$ are different, in particular a linear constraint rises from link state of links in set $S_i^1$ whereas a non linear one rises from link state of links in set $S_{i,j}^2$.

To clearly highlight and explain this assertion let us proceed in two steps. As first step consider a very simple star-topology network and focus attention on central node, say $i$, in such a network the set $G_i$ coincide with the set $S_i^1$ since all nodes are one hop away from i. Suppose that a theoretical capacity $C_i$ is associated with the set $G_i$ and that a certain number of units of flow have been yet routed correctly on network's links; now the problem is to understand how many units of flow may be routed over the whole set of links in $G_i$. The equality of $G_i$ and $S_i^1$ means that each units of flow routed in any of the links belonging to $G_i$ has effect also on all the other links as consequence of physical broadcast transmission. For example if a certain number of units of flow are transmitted from node $i$ to one of its neighbour, this wouldn't effect just the state of link between node $i$ and the selected destination but would modify the state of all links adjacent to node $i$ reducing their residual capacity and hence the overall residual capacity of set $G_i$. Besides these reductions are cumulative, i.e. their effects sum one another linearly.

Expressing mathematically this situation, the resulting constraint that must be set in order to avoid collision in the one hop neighborhood is given by:

$$\sum_{k=1}^{K} \sum_{(i,j) \in G_i} f_{i,j}^k \leq C_i$$

but in this case there is equality between $G_i$ and $S_i^1$ and since, as will be clearer soon, this constraint derives from links adjacent to node i it is better to rewrite the constraint in the following way:

$$\sum_{k=1}^{K} \sum_{(i,j) \in S_i^1} f_{i,j}^k \leq C_i$$

Now let introduce a slight enhancement to the simple topology assumed in the first step: assume that also links two hops away from node $i$ exist; this means that the sets $S_{i,j}^2$ are not void and hence it is no more valid the equality of S $S_i^1$ and $G_i$ but $G_i$ must be defined as, recalling that:

$$G_i = \left\{ S_i^1 \cup \bigcup_{n_j \in A(n_i)} S_{i,j}^2 \right\}$$

Suppose to have a capacity $C_i$, in general different from the one assumed in previous step, associated with $G_i$ and let explore effects of routing new units of flow on links that belong to any of $S_{i,j}^2$, , i.e. on links that are two hops away from node $i$ . When new units of flow are routed on a link that is two hops away from $n_j$ , this provokes a reduction of overall residual capacity of the whole set $C_i$ but the effects of these kind of reductions are not cumulative as before.

Consider a generic link $(j,l)$ between node $j$ and node I belonging to $S_{i,j}^2$ (i.e. also the link from node I and node j exists) and suppose to route an amount $d_1$ of units of flow on this link; this implies a reduction of $d_1$ units of flow on residual capacity not only on link $(j,l)$ but also on all link adjacent to node $j$ and since this relay/node is a neighbour of $i$ then reduction have effect also on all links in $G_i$ .

In fact any transmission on any link adjacent to $i$ would reach node $i$ and to avoid overloading of this node must be taken in account also the state of links in $S_{i,j}^2$ .

Suppose now that new amount $d_2 > d_1$ of units of flow is routed on another link in $S^2_{i,u}$, e.g. on link $(u, w)$ between node $u$ and node $w$; remember that also link from $i$ to $u$ exists. As before, this implies a reduction of the residual capacity of exactly $d_2$ units of flow not only on link $(u, w)$ but also on all links adjacent to U and hence on links in $G_j$.

In this case it is not true that these two reductions must be summed as happened for unit flow routed in the one hop neighbourhood of $i$, in fact, if it is taken in account the reduction of $d_2$ units of flow to avoid overloading of node $u$ this automatically assures also avoidance of overloading of node $j$ since it imposes a reduction of just $d_1 < d_2$ units of flow. So when considering links belonging to the various sets $S^2_{i,j}$ only the one that gives the more restrictive constraint must be taken in account, i.e. only the more loaded of this group must be considered. This can be expressed mathematically using the max operator:

$$\max_{S^2_{i,j}} \left\{ \sum_{k=1}^{K} \sum_{(j,l) \in S^2_{j,l}} f^k_{j,l} \right\}$$

The equation above simply selects among the various $S^2_{i,j}$ associated to neighbours of relay $i$ the more loaded one, i.e. the one that gives the more restrictive constraint.

Putting together the constraints deriving from the set $_s S^1_i$ and from the more loaded set of the various $_s S^2_{i,j}$ and generalizing the result to every set $G_i$ of the generic Fixed Relay Network, it is finally possible to write the constraint to be inserted in the mathematical model as follow:

$$\sum_{k=1}^{K} \sum_{(i,j) \in S^1_i} f^k_{i,j} + \max_{S^2_{i,j}} \left\{ \sum_{k=1}^{K} \sum_{(j,l) \in S^2_{i,j}} f^k_{j,l} \right\} \leq C_i \, \forall G_i$$

Basing on this mathematical constraints, equations adopted in routing arrangements have been developed.

Essentially, these are based on the following concepts:

- determining the capacity exploited on the existing links involving a given node (*j*),
- determining, for each of the nodes in the network that are neighbouring nodes to the given node (*j*), a respective capacity exploited on the existing links involving each of said neighbouring nodes other than said existing links involving said given node (*j*),
- finding the maximum of said respective capacity over said nodes in the network that are neighbouring nodes to said given node (*j*), and
- including said given node (*j*) in said path search only if the sum of said capacity and said maximum is not in excess of a given threshold (*$C_i$*).

It is also possible to define the capacity of a node in bit/sec as the bit rate that could be reached in transmission or reception by the node in question; this is usually limited by physical/MAC constraint.

An assumption of the routing arrangement described herein is the existence of a central entity, as an AP/BS or even one of the relays themselves that detains the information on the whole network topology and is also aware of all flows actually admitted in the network, especially as regards their requested bandwidths and routes.

In a fixed relay network this assumption is not particularly unfair: in fact topology information can be stored in a central entity directly by the operator once the network is created, while maintaining the information about all the flows involves a minor overhead.

Additionally, in order to guarantee Quality of Service, it is necessary for at least the central entity of being aware of certain lower level system parameters that are channel bandwidth and maximum number of slot at disposal at slotted mac layer if in use, this last information is needed not for routing, but for run our scheduling routing, by the way not a mandatory choice.

The main features of the routing arrangement in question are the following.

Routes are established in a centralized manner by the central entity using precise information about the network state; if a feasible route is found, the new flow is admitted in the network, otherwise it is rejected and no packet of that flow could be transmitted in the network.

Packets belonging to different flows are treated separately (i.e. on a flow-by-flow basis) even if the flows have the same source and/or the same destination.

The arrangement described operates by considering the source-destination parameters of all flows in the network (i.e. on an end-to-end basis) and not only taking greedy decision hop-by-hop.

A route for a new flow to be admitted to the network is determined efficiently by handling the following information structure:

- a global database in the central entity, which represents exactly the actual situation in the network, is comprised of :

- a topology matrix - this is a NxN matrix where N=|V| is the number of transceiver in the network and so the number of vertexes in the graph that represent the network. The values in the matrix are set as follows:

$$[k][j] = 1 \Leftrightarrow (k, j) \in E$$

$$[k][j] = 0 \text{ otherwise;}$$

- a rc_matrix - this is a NxN matrix where N=|V| is the number of transceiver in the network and so the number of vertex in the graph that represent the network. The generic element [k][j] of the matrix represents the residual capacity on radio link "k" to "j"; i.e. the load in bit/sec that could be forwarded on that link without engendering saturation and hence packet loss. If the radio link "k" to "j" does not exist, the corresponding element is set to zero;
- weight_matrix - this is a NxN matrix where N=|V| is the number of transceivers in the network and so the number of vertex in the graph that represent the network. The generic element [k][j] of the matrix represents a weight associated to the radio link "k" to "j"; this weight is function of the load yet present on that link and is a indicator of saturation level of the link. These weights are the metric used to select the best route among all the feasible ones. If the radio link "k" to "j" does not exist the corresponding element in the matrix is set to zero;
- tab_flow - this is a list with an entry for each flow already admitted in the network, including - for each flow in the list - a flow identifier, the source and destination, the requested bandwidth, a flag used in the optimization routine better detailed in the following and the path used by the flow;
- tab_status - this is a list that has an entry for each transceiver of the network, each entry including the following parameters regarding the corresponding node: usedband, freerx, freetx. The entity "usedband" represents the capacity the node has already in use either for transmitting or receiving, while freerx represents the node capacity available (i.e. free) to receive without collisions. Finally freetx represents the node capacity available (i.e. free) to transmit without collision.

Further a routing table is provided at each transceiver. Every routing table has an entry for each flow generated or forwarded by the corresponding node. Each entry includes the flow identifier, the source and destination of the flow and the next hop to use to forward packets of that flow.

At the beginning of operation, when no packets are transmitted over the network, the information structure is initialized as follows:

- the topology matrix is given as an input;
- the rc_matrix has those elements corresponding to existing radio links set to one (this implicitly assumes that the node capacity is normalized to one, so that the residual capacity, the bandwidths requested by the various, as well as the entities usedband, freerx and freetx all lie in the [0,1] range). Other elements are set to zero;
- the weight_matrix has those elements corresponding to existing radio links set to one and the other elements set to zero;
- tab_flow has no entry since no flow has been admitted to the network yet;
- in tab_status the N entries for usedband are set to zero, those for freerx set to one and those for freetx set to one since no flow has been generated or forwarded by nodes;
- the routing table of each node has no entry.

The following relationships give the evolution of the parameters describing the state of the network.

Once that new route in set, the central entity, reads the sequences of relays forming the path $\underline{p}$ and for each relays in the path perform the following operations:

$$usedband(j) = usedband(j) + \tilde{b} \leftrightarrow j \in \underline{p} \wedge j \neq t$$

where with a slight abuse of notation with $j \in \underline{p}$ it is meant that relay j is in the route of the new admitted flow/connection.

The equation above states that usedband of all relays along the newly selected path must be reduced of a fraction exactly equal to the rate bit of the new flow normalized to channel bandwidth, this reduction is to due to transmission of the packets of the new flow. Reduction does not apply to destination relay since it should not retransmit anything to any other relay. But transmission is not the only reason that leads to modify the usedband value for the relay, in fact it is necessary to remember that relays are assumed to be equipped with omni directional antennas and thus each transmission reaches all relays inside the radio coverage of the transmitting one.

Therefore, central entity also perform the following updating:

$$usedband(k) = usedband(k) + \tilde{b} \leftrightarrow k \in H_1(j) | j \in \underline{p} \wedge j \neq t$$

The equation above asserts that the usedband of all relays/nodes that are neighbouring nodes of a transmitting node must be updated since they receive the transmitted signal even if not addressed to them. A relay forming a path $\underline{p}$ has its usedband updated even three times as it may receive packets from the relay behind in the route, may transmit to its next hop and finally may receive the (useless for it) transmission of the next hop.

In this description it has been assumed that the source and the destination of the connection are relays inside a fixed relay network (FRN), this could means that in a real environment, users may connect to FRN using a radio interface different from the one used inside the FRN itself.

Once that usedband value has been updated for all relays in the network, central entity starts to update the other parameters in status tab $\underline{ft}$, firstly it updates the value of freerx variable since this value depends only on what happens in the relay itself:

$$freerx(j) = 1 - usedband(j) \forall j \in V$$

in this way, in setting the status of relay j, account is taken of what happens in its neighbourhood as in *usedband (j)* enters signals transmitted and received by node k; so this parameters and hence the *freerx(j)* depends only on what happens in node j and in its one hop cluster (the nodes from which j could receive).

As repeatedly stated, it is not generally enough to look at hop one cluster of each relay to be able to meet the constraints of the mathematical model. In fact in order to avoid the hidden terminal problem it is necessary to take care also of two hop cluster of each relay. For so doing the variable *freetx* is introduced and that is updated with following rule:

$$freetx(j) = 1 - \max\left\{\max_{k \in H_1(j)}\{usedband(k)\}; usedband(j)\right\}$$

The equation above partially introduces in the algorithm rules the mathematical constraint considered in the foregoing. In fact, it states that the fraction of channel bandwidth that the given relay *j* has still free and available to transmit without causing collision or overloading of other relays is bounded either by itself or by the relays in its neighbourhood that has the highest fraction of channel bandwidth busy. The parameter *usedband*(*k*), that is a measure of how loaded the relay k is, contains in itself all the information about what happens to the relay k considering its own transmission and received signals by its neighbour relays, but a relay in $H_1(k)$ is in set $H_2(j)$, i.e. is two hops away from relay j.

This means that the value of *freetx(j)* is influenced from the status of the relay *j* itself, from status of relays in its hop cluster and finally also from status of relays that are two hops away from *j*. In this way we ensure that care is taken of *j*'s two hops cluster and to avoid therefore any collision in any of nodes reachable by *j*'s transmission.

By introducing the parameters *freerx(j)* and *freetx(j)* for each relay within the FRN a de facto distinction is made as to the fraction of the channel bandwidth B (i.e. the normalized bandwidth) each relay could use for receiving and how fraction could use for transmitting; these two fraction in general are different and this allow us to have a better resources management and in the meanwhile introduce the abstraction of incoming radio link and out coming radio link as separated entities in route computation.

As a consequence the network model managed is represented by a directional graph in which for each pair of neighbouring relays *j* and *k* the mono directional link from *j* to *k* and the mono directional link from *k* to *j* are considered separately. In fact this separation stands during route computation, but any change in load of one of this two entity will reflect on the other (more precisely will affect all relays within two hops).

The residual capacity of a given radio link "k" to "j" and its weight are then set. As indicated above, the residual capacity of a radio link "k" to "j", indicated with rc(k,j), is the capacity still available on the link.

This is defined as:

$$rc(k,j):=\min\{ \text{freetx}(k), \text{freerx}(j) \}$$

$$\text{hence rc\_matrix[k][ j ]=rc(k,j)}$$

In general, rc(k,j) is different from rc(j,k) (when the reverse link exists). This is significant as it gives the possibility of using a network model with mono-directional links between nodes in the place of bi-directional links. By being able to distinguish the incoming free capacity (the freerx value) from the outgoing free capacity (the freetx value) of a node, the arrangement is able to use the shared radio resource more efficiently.

The weight associated with a mono-directional link is a function of the load level in that link. The higher the load of a link, the higher its weight: this will give a precise idea of the link to be preferred in order to balance traffic and avoid congestion when the arrangement searches for a new route.

To set the weight the following definition is introduced for a generic radio link "k" to "j":

$$\text{sat}(k,j):=1-rc(k,j)$$

This represents the level of saturation of the link, with sat(k,j) in [0,1]:

- sat(k,j)=0 thus means that the radio link has no load through it,
- sat(k,j)=1 conversely means that the link is fully loaded, a condition which should be avoided.

The arrangement described herein also introduces a penalty function of the network, i.e. a function that incorporates all the constraints to be respected.

In this case, the condition is assumed as a constraint that no link is fully saturated and a penalty function PF ($\underline{S}$) is introduced depending on the saturation level of each link of the network defined as:

$$PF(\underline{S}) = \sum_{(k,j)} \frac{1}{(1 - \text{sat}(k, j))}$$

The penalty function goes to infinity when even a single constraint is violated, i.e. when even a single link is fully saturated.

The exemplary arrangement described herein uses the first derivative in sat(k,j) of PF(S̲) as the weight for the radio link "k" to "j". In that way the higher the weight of a network portion, the nearer the saturation thereof and the faster the arrangement will move toward it choosing the correspondent link for a route.

Consequently:

$$w(k, j) = \frac{1}{(1 - sat(k,j))^2}$$

where w(k,j) represents the element [k][j] in weight_matrix.

As indicated at the outset of this detailed description, the routing arrangement described herein runs at least in the central entity.

When a source node "s" needs a route toward a destination node "d", it sends a route request to the master relay specifying itself as the source of the new flow, "d" as the destination and the requested bandwidth of the flow, i.e. the bit rate that should be supported by the network.

Initially, the central entity verifies if it is possible to route the new flow given the actual network condition. Using the information stored in the topology matrix, the residual capacity matrix and the weight matrix, the central entity applies a customized version of Dijkstra algorithm that doesn't explore all relays in the network for find out the requested route, but, through a on purpose developed routine, only those relays that can support the QoS requirements are explored to find out a feasible route.

The links metric used is given by the values stored in the weight matrix; the total weight of a path is the sum of the weight associated to the links in the path. In this way also the load balance in the network is implicitly obtained. Preferably, the Dijkstra algorithm is modified in order to find the shortest path between node "s" and node "d" only among the feasible paths. The method described herein is thus able to discard a priori during the route searching process those paths that will not have sufficient residual capacity to support the new flow.

In order to do this, a specific routine as detailed in the following is used to determine if the Djikstra algorithm should explore a given node "k" or not.

This routine takes in account the effect of physical broadcast.

The following are exemplary fall-through controls executed in the presently preferred embodiment of the arrangement described herein.

If j is the source node (s) then it is immediately discarded and connection refused if it has not a *freetx(j)* at least equal to the flow requested bandwidth normalized to the channel bandwidth, defined as $\tilde{b}$. Otherwise, if j is the source node and k is not the destination node, this means that the node k will transmit either to destination or to a next hop toward destination. In both cases, due to the physical broadcast, the signal forwarded by k will reach also j, so, in this first case that applies just at the first Dijkstra iteration when j is the source node, must be controlled that j can receive the signal retransmitted by the node k without violating any constraints. This means that j should have *freetx(j)*≥$\tilde{b}$ , and this is verified if the node j has not been discarded so far, and should not have *usedband(j)*+2$\tilde{b}$ > 1; this latter condition derives from necessity that j should receive the signal retransmitted by the node k, that consumes a fraction $\tilde{b}$ of its still not in use capacity, after that j itself has transmitted the signal thus having yet consumed a fraction $\tilde{b}$. If the last equation is true connection is refused. To notice that this first set of control does not say if the node k could be selected for next Dijkstra iteration or not, but only has the objective of verifying if j as the source node can support the new connection.

If the connection is not refused preliminarily, then the routine controls if the node k is the destination node. If so, the node k could be selected since the node j can transmit directly to destination, evolution equations we have set guarantee that d can receive, and does not receive any re-transmissions, hence no other conditions are needed to select the node k for next Dijkstra iteration.

The routine arrives at this step if and only if j is not the source node and k is not the destination node. If j is not the source node, then it scan surely receive signals from its previous hop, transmit them to the next hop and receive possible retransmission from the next hop; all this since node j has been yet selected by the search algorithm and hence has yet fallen through previous and following controls. Besides if the routine reaches this stage, the control node k is different from the destination node (d), otherwise it will be selected in the control step.

In this case a preliminary condition that must stand not to discard immediately the node k as the next potential Dijkstra selection is that the node k can forward packets of the new connection. Therefore if the node k has *freetx(k)*<$\tilde{b}$ then it is immediately discarded, since all additional controls would be useless. If the node k is not discarded here it means that potentially it could forward packets of the new connection but other controls must be passed before selecting it.

Then the routine controls if one or more common neighbour (i.e neughbouring nodes) exists for the node j and the node k. Such a common neighbour will receive transmissions from botgh j and of k (that is not the destination node). If such a common neighbour cannot receive both transmissions without violating the constraints set, then the node k is discarded.

If the node k has not been discarded before, then the routine controls whether the destination node d is a neighbour of k or not. If d is a neighbour, then a check is made as to whether k could receive signals from its previous hop j and retransmit them to destination. So if $usedband(k)+2\tilde{b} \leq 1$, then the node k is selected, otherwise discarded. If the destination node d is not a neighbour of the node k, this means that the node k must be able to receive from its previous hop j, transmit to a next hop different from the destination and finally receive retransmission from its next hop. So if $usedband(k)+3\tilde{b} \leq 1$ then node k is selected, otherwise discarded. These conditions are more restrictive than the control considered in the foregoing.

If the Djikstra path search algorithm returns a feasible path, a last control is performed before admitting the new flow along the route computed. In fact, even if Djikstra returns a feasible path, the new flow/connection might have to be rejected because it causes collisions due to particular topology condition. This is particularly the case when nodes exist having two or more nodes of the route as neighbors.

Consequently, before admitting the new flow along the computed route, the routing of the new flow is simulated and the network parameters are updated using temporary information structures in order to verify if the new path is truly feasible or any collisions may occur.

If the method described herein finds a feasible route for the new flow between node "s" to node "d", the master relay sends a route replay message to each node in the computed path (except for the destination that has no next hop). This also specifying the identifier assigned to the new flow, the source node, the destination node and the next hop to be used. Each node will insert this information in a new entry in its routing table. Additionally, the central entity updates the network parameters to take in account the effect of the new flow.

If the method does not find a feasible route, the optimisation routine is activated. Briefly, the arrangement described herein tries to admit new flows, for which no feasible route has been found by the route searching routine, by re-distributing yet admitted flow in order to set up a more optimal load balancing and make room for new connection.

Using information stored in its global database the central entity tries to re-route the admitted flows in order to verify if it is possible to create a feasible path for the new flow up to the destination.

Obviously, the arrangement in question still guarantees a given Quality of Service level to each flow admitted in the network, even if re-routed.

Firstly, the optimisation routine selects the flow with the lowest identifier that has not been selected yet, copies the global database in its own temporary structure and modifies the network parameters as if the selected flow did not exist: i.e. the routine cancels the effects of the selected flow from the network parameters (obviously, during the run time of optimisation routine in the real network nothing happens to the flow admitted).

In order to force the Dijkstra algorithm to search for a different route for the selected flow, the weight of the links incoming or outgoing with respect to nodes in the actual route (except for the source and destination nodes) are set to infinity.

Finally the route searching routine is run. If it is not possible to re-route the selected flow, the optimisation routine resets its temporary information structure, marks the flow as selected and then selects a new flow to re-route.

If re-routing of the selected flow over a new feasible path is feasible, then the optimisation routine updates the network parameters stored in its own temporary structures as if the selected flow is were forwarded along the new route (in the real network nothing changes so far) and runs again the route searching routine for the new flow.

If a feasible path for the new flow is found, then all the flows that has been re-routed by the optimisation routine are really re-routed also in the network and these changes are notified to the nodes on the old routes and on the new routes. The new flow is admitted in the network along the computed route and the routing tables of the nodes involved are updated; the network parameters are similarly updated and finally the optimisation routine resets its temporary structures and de-marks all the flows that if had marked.

If no feasible path is found for the new flow, the optimisation routine stores in a memory the possible re-route found so far: i.e. it does not reset its own temporary information structures, it marks the flow re-routed as selected and selects a new flow to re-route.

When all the flows have been marked and no feasible path has been found for the new flow, the new flow is rejected and the optimisation routine resets its temporary structures and de-marks all the flows it had marked (so that no changes ever occur in the network).

Once a new flow has been admitted to in the network along its new route or a flow already admitted is re-routed along a new route, the central entity must record in its global database the new status of the network. Each node included in the new route is selected starting from the source node and following the route up to the destination node.

Once a node has been selected, its usedband variable is reduced by a value equal to the requested bandwidth of the flow because of transmission (this is effected in all the nodes in the network except for the destination - that does not transmit). Because transmission is in physical broadcast also the usedband variables for all those nodes that are neighbours of the selected node are reduced by the same value.

When this is done for each node in the new route, the central entity updates all the other network parameters following the relationships described in the model description.

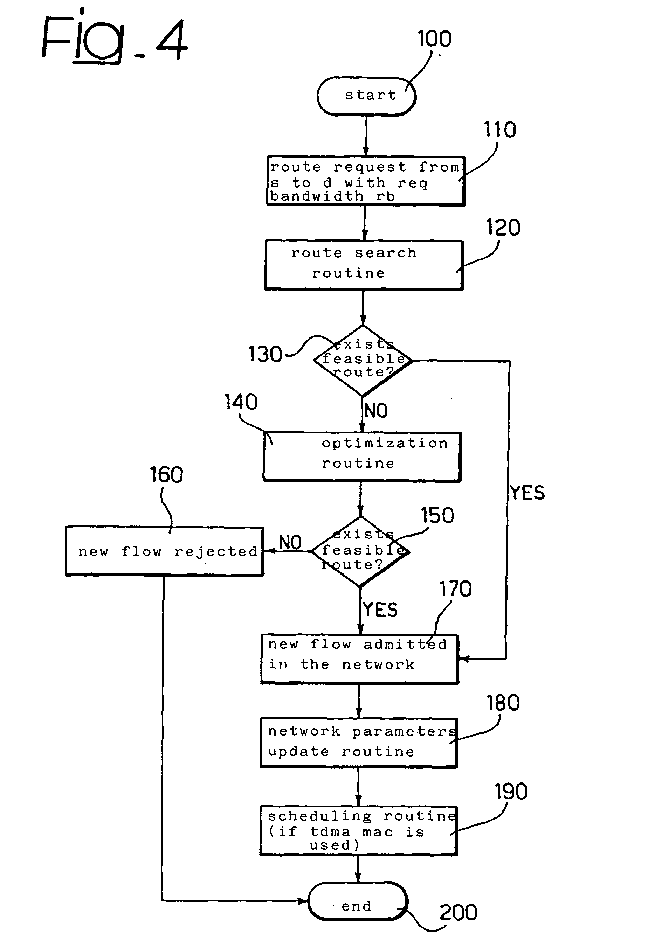

The general evolution of the routing process is further described in the flow chart of Figure 4, starting from a step 100.

When a relay receives a request for admitting a new flow in the network, it forwards the request to the master relay central entity by specifying the source ("s"), the destination ("d") and the requested bandwidth ("rb") for the new flow.

These parameters/requirements are considered in a step 110.

In a step 120 a route search routine is executed. In a decision step 130, a decision about the existence of a feasible route is taken.

If a feasible route does not exist the process continues with a step 140, otherwise it continues with a step 170. In a step 140 an optimisation routine is executed.

In a decision step 150, a decision about the existence of a feasible route is taken.

If a feasible route does not exist the method continues with a step 160, otherwise it continues with step 170.

In the step 160 the new flow is rejected and the method continues with the conclusive step 200.

Otherwise, if a feasible route exists, in a step 170 the new flow is admitted in the network, and in a following step 180 the network parameters update routine is executed.

In a step 190 if the TDMA MAC layer is used and the scheduling routine is executed. After the step 190, the process evolves towards the conclusive step 200.

The new centralized routing arrangement described in the foregoing is adapted to operate with any kind of MAC layer.

The arrangement described guarantees a given Quality of Service to the flows admitted in the network: it is thus advantageous to use a MAC layer that is able to support the Quality of Service guaranteed at the upper level rather than, say, a CSMA MAC type as 802.11.

A particularly preferred MAC format for the arrangement described is a slotted TDMA MAC where only non-interfering nodes can transmit in the same time slot. This particular kind of MAC layer leads to network operation of a kind where each and every transmission is guaranteed to be collision-free.

As already indicated, the interfering nodes are those nodes that are either one-hop or two-hops away. In this latter case simultaneous transmissions will interfere at the common neighbours (at least one exist); i.e. if a radio link "k" to "j" exists then "k" and "j" are interfering nodes, further if a node "n" and a radio link "n" to "j" exist then also "k" and "n" are interfering nodes (their simultaneous transmission will collide at "j"). Consequently, "k", "j" and "n" cannot transmit in the same time slot.

Using this kind of MAC layer a problem arises related to scheduling the transmission at the nodes in the network.

An interesting feature of the routing arrangement described herein lies in the separation of route searching from transmission scheduling.

In several Quality of Service routing protocols proposed for slotted TDMA, route searching is based on the knowledge of the free time slots for each node in the network.

Conversely, the arrangement described herein does not need require, while ensuring thoroughly appropriate scheduling. An apposite scheduling routing for optimised TDMA mac layer, is run each time a new flow is admitted in the network or an already admitted one is re-routed. Given the topology matrix of the network and information as to the nodes that have flow(s) to transmit (each with an associated requested capacity), a scheduling routine determines how to assign time slots. Starting from the graph that represents the network and from the knowledge of the nodes that are actually transmitting nodes, the routine creates a transmission conflict graph whose vertexes are the transmitting nodes and a non-directional link exists between two nodes if and only if they are interfering according to the definition above. Once the transmission conflict graph is set, the routine applies to each node a label representing how many time slots must be assigned to that node in order to satisfy its capacity requirement and then launches a heuristic vertex multi-colouring algorithm. At the end, no neighbouring vertexes will exist having assigned the same colour and the number of colours assigned to each node will be equal to the number of time slots required (a single time slot is identified with a unique colour).

The total number of colours used corresponds to the number of time slots in the MAC frame and nodes having the same colours could have transmission scheduled in the same time slot. The MAC frame is dynamic, in that frame duration within a given maximum length] and slot assignment are set up ex novo each time the scheduling routine is launched.

Of course, without prejudice to the underlying principles of the invention, the details and the embodiments may vary, also appreciably, with reference to what has been described by way of example only, without departing from the scope of the invention as defined in the annexed claims.

**Claims**

1. A method of controlling routing operations in a network including nodes (10, 20, 30) configured for multihop communication in the form of independent connections over wireless links connecting said nodes (10, 20, 30), wherein each said node has a set of neighbouring nodes and transmissions from a given node directed to a targeted neighbouring node are received also by at least one non-targeted neighbouring node, wherein at least one of said nodes is configured for managing routing operations by performing a path search (120) involving those nodes in the network adapted to support a given quality requirement of said connections, the method including the steps of:

   - determining the capacity exploited on the existing links involving a given node (j),
   - determining, for each of the nodes in the network that are neighbouring nodes to said given node (j), a respective capacity exploited on the existing links involving each of said neighbouring nodes other than said existing links involving said given node (j),
   - finding the maximum of said respective capacity over said nodes in the network that are neighbouring nodes to said given node (j), and
   - including said given node (j) in said path search (120) only if the sum of said capacity and said maximum is not in excess of a given threshold ($C_i$).

2. The method of claim 1, **characterized in that** said given threshold ($C_i$) is selected as a function of the theoretical capacity exploitable on the whole of said links.

3. The method of either of claims 1 or 2, **characterized in that** said routing operations comprise a routing scheme independent of the specific radio and access level technologies used in said wireless links of said network (10, 20, 30).

4. The method of any of the preceding claims, **characterized in that** it includes the step of associating weights to said wireless links in said network (10, 20, 30), whereby automatic load balancing is obtained through said network (10, 20, 30) via said path search (120).

5. The method of any of the preceding claims, **characterized in that** said path search (120) applies only to a subgraph of the topology of said network (10, 20, 30) to guarantee a requested bandwidth (rb) of an incoming connection.

6. The method of any of the preceding claims, **characterized in that** it includes the steps of:

   - using as a metric in said path search (120) an indicator of the saturation of said wireless links, and
   - selecting, out of a plurality of feasible paths identified via said search, the least loaded of said feasible paths based on said metric.

7. The method of any of the preceding claims, **characterized in that**, if no feasible routing path is found as a result of said path search (120), it includes the step of performing an optimization routine (140) of said network (10, 20, 30) in order to verify the possibility of re-routing existing connections in order to admit a new connection while supporting said given quality requirement for all the connections in said network (10, 20, 30).

8. The method of claim 7, **characterized in that** it includes the step of re-rerouting said existing connections only if said re-routing effectively admits said new connection, otherwise no routing changes take place in said network (10, 20, 30).

9. The method of either of Claims 7 or 8, **characterized in that** said optimization routine (140) selects a connection that has not been selected yet and virtually modifies the parameters of said network (10, 20, 30) as if said selected connection did not exist, thus cancelling the effects of the selected connection from a temporary copy of the network parameters.

10. The method of Claim 7, **characterized in that**, if a selected connection cannot be re-routed, said optimization routine (140) resets its temporary information structure, marks the connection as selected and then selects a new connection to be possibly re-routed.

11. The method of either of Claims 9 or 10, **characterized in that** it includes the step of associating weights to said wireless links in said network (10, 20, 30), thus producing a weight matrix, and said optimization routine (140) includes the steps of:

- selecting, out of a plurality of currently routed connections, a connection that has not been selected yet,
- searching for said selected connection a path different from the current path, by setting to infinity in said temporary copy of said weight matrix the weights associated with the links involving nodes in said current path other than the source (s) and destination (d) nodes.

12. The method of Claim 9, **characterized in that**, if a selected connection can be re-routed over a new feasible path, said optimization routine (140) updates the network parameters of its temporary copy and the route searching is run again for the new connection, and then re-routing takes effectively places in the network (10, 20, 30) if said route serching ends successfully.

13. The method of Claim 7, **characterized in that**, if a selected connection can be re-routed over a new feasible path, said search is run (190) for said new connection.

14. The method of any of the preceding claims, **characterized in that** said given quality parameter is a requested bandwidth (rb).

15. The method of any of the preceding claims, **characterized in that** said routing operations involving a search (120) for a feasible routing path for a connection having a requested bandwidth ($\tilde{b}$) normalized to the channel bandwidth from a source node (s) towards a destination node (d), wherein the method includes the step of determining if a given node (k) should be selected or discarded from said path search (120) when the actual selected node by said path search (120) is a given node (j) neighbour of said given node (k), by:

- i) immediately discarding said given node (j) and refusing connection if said given node is the source node (s) and has not an available transmission bandwidth ($freetx(j)$) at least equal to said requested normalized bandwidth ($\tilde{b}$);
- ia) if said given node (j) is the source node (s) and has not been immediately discarded, verifying if said given node (j) can support said connection by:

  - verifying that, if given node (k) is not said destination node (d) and whereby said node (k) will either transmit to said destination node (d) or to a next hop toward said destination node (d), the condition $usedband(j)+ 2\tilde{b} > 1$ is met, wherein $usedband(j)$ denotes the normalized transmission bandwidth used by said given node and $\tilde{b}$ is said requested normalized bandwidth, and
  - refusing said connection if said condition is met;

- ii) if said condition is not met and said connection is not refused, checking whether said further node (k) is said destination node (d) and, if so, said given node (K) is selected for next iteration of said path search (120)
- iiia) if said given node (j) is not the so said source node (s) and said given node (k) is not the said destination node (d), checking whether said further node (k) can be selected for said search by checking whether the available transmission bandwidth ($freetx(k)$) of said further node (k) is less than said requested normalized bandwidth ($\tilde{b}$), and discarding said further node (k) from the search if said condition is met;
- iiib) if said condition is not met and said further node (k) is not discarded, checking whether at least one common neighbouring node exists for said given node (j) and said further node (k) adapted to receive transmissions from both the said given node (j) and (k) with said requested normalized bandwidth ($\tilde{b}$), and discarding said further node (k) from the search if such common neighbouring node is found to exist and has not sufficient capacity to receive transmissions from both said given node (j) and (k),
- iiic) if said further node (k) is not discarded, checking whether said further node (k) is a neighbouring node of said destination node (d),
- if said further node (k) is a neighbouring node of said destination node (d), checking whether the condition $usedband(k)+ 2\tilde{b} \leq 1$ is met, wherein $usedband(k)$ denotes the normalized transmission bandwidth used by said further node (k) and $\tilde{b}$ is said requested normalized bandwidth,
- selecting and discarding said further node (k) if said condition is met or not met, respectively; and
- if said further node (k) is not a neighbouring node of said destination node (d) whether the condition $usedband(k)+ 3\tilde{b} \leq 1$ is met, wherein $usedband(k)$ denotes the normalized transmission bandwidth used by said further node (k) and $\tilde{b}$ is said requested normalized bandwidth,
- selecting and discarding said further node (k) if said condition is met or not met, respectively.

16. The method of any of the preceding claims, **characterized in that** it includes call admission control (CAC) functionalities (130) in order to preserve support of said given quality requirement for the connections already existing in said network (10, 20, 30) by refuse admission to said network (10, 20, 30) of a given connection if neither said path search (120) nor said optimization routine (140) are able to set a feasible path.

17. The method of Claim 1, **characterized in that** it includes the step of rejecting a new connection seeking to enter said network (10, 20, 30) if said new connection is found able to cause at least one of collisions, overload, and anomalous delay.

18. The method of either of claims 1 or 17, **characterized in that** it includes, before admitting a new connection seeking to enter said network (10, 20, 30), the steps of simulating the routing assigned to said new connection and updating (180) the network parameters in order to verify if the a respective new path is feasible or any collisions may occur.

19. The method of Claim 18, **characterized in that**, if a feasible path is found for a new connection seeking to enter said network (10, 20, 30), it includes the steps of sending a route replay message to a set of nodes in said feasible path specifying at least one of the identifier assigned to the new connection, the source node (s), the destination node (d) and the next hop to be used.

20. The method of any of the preceding Claims, **characterized in that** said flows in said network (10, 20, 30) include data packets and **in that** the method includes the step of treating packets belonging to different connections separately, even if the connections have the same source node (s) and/or the same destination node (d).

21. The method of any of the preceding Claims, **characterized in that** the method includes the step of taking into account on an end-to-end basis the source (s) and destination (d) parameters of all the connections in said network (10, 20, 30).

22. A system for controlling routing operations in a network including nodes (10, 20, 30) configured for multihop communication in the form of independent connections over wireless links connecting said nodes (10, 20, 30), wherein each said node has a set of neighbouring nodes and transmissions from a given node directed to a targeted neighbouring node are received also by at least one non-targeted neighbouring node, wherein at least one of said nodes is configured for managing routing operations by performing a path search (120) involving those nodes in the network adapted to support a given quality requirement of said connections, wherein said at least one managing node (BS, AP) is configured for performing the method of any of claims 1 to 21.

23. A computer program product, loadable in the memory of at least one computer and including software code portions for performing the steps of the method of any of claims 1 to 21 when the product is run on a computer.

**Patentansprüche**

1. Verfahren zum Steuern von Routingoperationen in einem Netz, das Knoten (10, 20, 30) enthält, die für Mehrsprungkommunikation in Form von unabhängigen Verbindungen über die Knoten (10, 20, 30) verbindende drahtlose Strekken ausgelegt sind, wobei jeder der Knoten eine Menge von benachbarten Knoten aufweist und an einen beabsichtigten benachbarten Knoten gerichtete Übertragungen von einem gegebenen Knoten auch von mindestens einem nichtbeabsichtigten benachbarten Knoten empfangen werden, wobei mindestens einer der Knoten dafür ausgelegt ist, Routingoperationen durch Ausführen einer Pfadsuche (120), an der die Knoten in dem Netz beteiligt sind, die dafür ausgelegt sind, eine gegebene Güteanforderung der Verbindungen zu unterstützen, zu verwalten, wobei das Verfahren die folgenden Schritte umfasst:

- Bestimmen der auf den existierenden Strecken, an denen ein gegebener Knoten (j) beteiligt ist, ausgenutzten Kapazität,
- für jeden der Knoten in dem Netz, die dem gegebenen Knoten (j) benachbarte Knoten sind, Bestimmen einer auf den existierenden Strecken, an denen jeder der benachbarten Knoten beteiligt ist, außer den existierenden Strecken, an denen der gegebene Knoten (j) beteiligt ist, ausgenutzten jeweiligen Kapazität,
- Finden des Maximums der jeweiligen Kapazität über die Knoten in dem Netz, die dem gegebenen Knoten (j) benachbarte Knoten sind, und
- Aufnehmen des gegebenen Knotens (j) in die Pfadsuche (120) nur dann, wenn die Summe der Kapazität und des Maximums eine gegebene Schwelle ($C_i$) nicht übersteigt.

2. Verfahren nach Anspruch 1, **dadurch gekennzeichnet, dass** die gegebene Schwelle ($C_i$) als Funktion der auf der Gesamtheit der Strecken ausnutzbaren theoretischen Kapazität ausgewählt wird.

3. Verfahren nach Anspruch 1 oder 2, **dadurch gekennzeichnet, dass** die Routingoperationen ein von den spezifischen Funk- und Zugangsebenentechnologien, die in den drahtlosen Strecken des Netzes (10, 20, 30) verwendet werden, unabhängiges Routingschema umfassen.

4. Verfahren nach einem der vorhergehenden Ansprüche, **dadurch gekennzeichnet, dass** es den Schritt des Assoziierens von Gewichten mit den drahtlosen Strecken in dem Netz (10, 20, 30) umfasst, wodurch automatischer Lastausgleich durch das Netz (10, 20, 30) über die Pfadsuche (120) erhalten wird.

5. Verfahren nach einem der vorhergehenden Ansprüche, **dadurch gekennzeichnet, dass** die Pfadsuche (120) nur für einen Teilgraph der Topologie des Netzes (10, 20, 30) gilt, um eine angeforderte Bandbreite (rb) einer ankommenden Verbindung zu garantieren.

6. Verfahren nach einem der vorhergehenden Ansprüche, **dadurch gekennzeichnet, dass** es die folgenden Schritte umfasst:

   - Verwenden eines Indikators für die Sättigung der drahtlosen Strecken als Metrik in der Pfadsuche (120) und
   - Auswählen eines am wenigstens belasteten der machbaren Pfade aus einer Vielzahl von machbaren Pfaden, die über die Suche identifiziert werden, auf der Basis der Metrik.

7. Verfahren nach einem der vorhergehenden Ansprüche, **dadurch gekennzeichnet, dass**, wenn als Ergebnis der Pfadsuche (120) kein machbarer Routingpfad gefunden wird, es den Schritt des Ausführens einer Optimierungsroutine (140) des Netzes (10, 20, 30) umfasst, um die Möglichkeit des Umroutens existierender Verbindungen zu verifizieren, um eine neue Verbindung zuzulassen, während die gegebene Güteanforderung für alle Verbindungen in dem Netz (10, 20, 30) unterstützt wird.

8. Verfahren nach Anspruch 7, **dadurch gekennzeichnet, dass** es den Schritt des Umroutens der existierenden Verbindungen nur dann umfasst, wenn das Umrouten effektiv die neue Verbindung zulässt, und andernfalls keine Routingänderungen in dem Netz (10, 20, 30) stattfinden.

9. Verfahren nach Anspruch 7 oder 8, **dadurch gekennzeichnet, dass** die Optimierungsroutine (140) eine Verbindung auswählt, die noch nicht ausgewählt worden ist, und die Parameter des Netzes (10, 20, 30) virtuell so modifiziert, als ob die gewählte Verbindung nicht existierte, um somit die Auswirkungen der ausgewählten Verbindung aus einer temporären Kopie der Netzparameter aufzuheben.

10. Verfahren nach Anspruch 7, **dadurch gekennzeichnet, dass**, wenn eine gewählte Verbindung nicht umgeroutet werden kann, die Optimierungsroutine (140) ihre temporäre Informationsstruktur rücksetzt, die Verbindung als ausgewählt markiert und dann eine neue möglicherweise umzuroutende Verbindung auswählt.

11. Verfahren nach Anspruch 9 oder 10, **dadurch gekennzeichnet, dass** es den Schritt des Assoziierens von Gewichten mit den drahtlosen Strecken in dem Netz (10, 20, 30) umfasst, um somit eine Gewichtsmatrix zu produzieren, und die Optimierungsroutine (140) die folgenden Schritte umfasst:

   - Auswählen einer Verbindung, die noch nicht ausgewählt worden ist, aus einer Vielzahl von derzeit gerouteten Verbindungen,
   - Suchen eines von dem derzeitigen Pfad verschiedenen Pfads für die ausgewählte Verbindung durch Setzen der Gewichte, die mit den Strecken assoziiert sind, an denen Knoten in dem derzeitigen Pfad außer den Knoten der Quelle (s) und des Ziels (d) beteiligt sind, auf unendlich in der temporären Kopie der Gewichtsmatrix.

12. Verfahren nach Anspruch 9, **dadurch gekennzeichnet, dass**, wenn eine ausgewählte Verbindung über einen neuen machbaren Pfad umgeroutet werden kann, die Optimierungsroutine (140) die Netzparameter ihrer temporären Kopie aktualisiert und die Routensuche erneut für die neue Verbindung ausgeführt wird, und dann Umrouten effektiv in dem Netz (10, 20, 30) stattfindet, wenn die Routensuche erfolgreich endet.

13. Verfahren nach Anspruch 7, **dadurch gekennzeichnet, dass**, wenn eine ausgewählte Verbindung über einen neuen machbaren Pfad umgeroutet werden kann, die Suche für die neue Verbindung ausgeführt wird (190).

**14.** Verfahren nach einem der vorhergehenden Ansprüche, **dadurch gekennzeichnet, dass** der gegebene Güteparameter eine angeforderte Bandbreite (rb) ist.

**15.** Verfahren nach einem der vorhergehenden Ansprüche, **dadurch gekennzeichnet, dass** bei den Routingoperationen eine Suche (120) nach einem machbaren Routingpfad für eine Verbindung beteiligt ist, die eine auf die Kanalbandbreite von einem Quellenknoten (s) zu einem Zielknoten (d) normierte angeforderte Bandbreite ($\tilde{b}$) aufweist, wobei das Verfahren den Schritt des Bestimmens umfasst, ob ein gegebener Knoten (k) aus der Pfadsuche (120) ausgewählt oder verworfen werden soll, wenn der tatsächliche ausgewählte Knoten durch die Pfadsuche (120) ein gegebener Nachbarknoten (j) des gegebenen Knotens (k) ist, durch

- i) sofortiges Verwerfen des gegebenen Knotens (j) und Verweigern der Verbindung, wenn der gegebene Knoten der Quellenknoten (s) ist und keine verfügbare Übertragungsbandbreite (*freetx*(*j*)) aufweist, die mindestens gleich der angeforderten normierten Bandbreite ($\tilde{b}$) ist;
- ia) wenn der gegebene Knoten (j) der Quellenknoten (s) ist und nicht sofort verworfen worden ist, Verifizieren, ob der gegebene Knoten (j) die Verbindung unterstützen kann, durch

- Verifizieren, dass, wenn der gegebene Knoten (k) nicht der Zielknoten (d) ist, und wodurch der Knoten (k) entweder zu dem Zielknoten (d) oder zu einem nächsten Sprung in Richtung des Zielknotens (d) sendet, die Bedingung usedband(*j*) + 2$\tilde{b}$ > 1 erfüllt ist, wobei *usedband*(*j*) die von dem gegebenen Knoten verwendete normierte Übertragungsbandbreite bezeichnet und $\tilde{b}$ die angeforderte normierte Bandbreite ist, und
- Verweigern der Verbindung, wenn die Bedingung erfüllt ist;

- ii) wenn die Bedingung nicht erfüllt ist und die Verbindung nicht verweigert wird, Prüfen, ob der weitere Knoten (k) der Zielknoten (d) ist, und wenn dem so ist, wird der gegebene Knoten (k) für die nächste Iteration der Pfadsuche (120) ausgewählt
- iiia) wenn der gegebene Knoten (j) nicht der Quellenknoten (s) ist und der gegebene Knoten (k) nicht der Zielknoten (d) ist, Prüfen, ob der weitere Knoten (k) für die Suche ausgewählt werden kann, durch Prüfen, ob die verfügbare Übertragungsbandbreite (*freetxt*(*k*)) des weiteren Knotens (k) kleiner als die angeforderte normierte Bandbreite ($\tilde{b}$) ist, und Verwerfen des weiteren Knotens (k) aus der Suche, wenn die Bedingung erfüllt ist;
- iiib) wenn die Bedingung nicht erfüllt ist und der weitere Knoten (k) nicht verworfen wird, Prüfen, ob mindestens ein gemeinsamer benachbarter Knoten für den gegebenen Knoten (j) und den weiteren Knoten (k) existiert, der dafür ausgelegt ist, Übertragungen von sowohl den gegebenen Knoten (j) als auch (k) mit der angeforderten normierten Bandbreite ($\tilde{b}$) zu empfangen, und Verwerfen des weiteren Knotens (k) aus der Suche, wenn gefunden wird, dass ein solcher gemeinsamer benachbarter Knoten existiert und keine ausreichende Kapazität zum Empfangen von Übertragungen sowohl von dem gegebenen Knoten (j) als auch (k) aufweist,
- iiic) wenn der weitere Knoten (k) nicht verworfen wird, Prüfen, ob der weitere Knoten (k) ein benachbarter Knoten des Zielknotens (d) ist,
- wenn der weitere Knoten (k) ein benachbarter Knoten des Zielknotens (d) ist, Prüfen, ob die Bedingung *usedband*(*k*) + 2$\tilde{b}$ ≤ 1 erfüllt ist, wobei *usedband*(*k*) die von dem weiteren Knoten (k) verwendete normierte Übertragungsbandbreite bezeichnet und $\tilde{b}$ die angeforderte normierte Bandbreite ist,

- Auswählen und Verwerfen des weiteren Knotens (k), wenn die Bedingung erfüllt ist bzw. nicht erfüllt ist; und
- wenn der weitere Knoten (k) kein benachbarter Knoten des Zielknoten (d) ist, Prüfen, ob die Bedingung *usedband*(*k*) + 3$\tilde{b}$ ≤ 1 erfüllt ist, wobei *usedband*(*k*) die von dem weiteren Knoten (k) verwendete normierte Übertragungsbandbreite bezeichnet und $\tilde{b}$ die angeforderte normierte Bandbreite ist,
- Auswählen und Verwerfen des weiteren Knotens (k), wenn die Bedingung erfüllt ist bzw. nicht erfüllt ist.

**16.** Verfahren nach einem der vorhergehenden Ansprüche, **dadurch gekennzeichnet, dass** es Funktionalitäten (130) der Call Admission Control (CAC) umfasst, um Unterstützung der gegebenen Güteanforderung für die bereits in dem Netz (10, 20, 30) existierenden Verbindungen zu bewahren, indem Zulassung zu dem Netz (10, 20, 30) einer gegebenen Verbindung verweigert wird, wenn weder die Pfadsuche (120) noch die Optimierungsroutine (140) in der Lage sind, einen machbaren Pfad zu setzen.

**17.** Verfahren nach Anspruch 1, **dadurch gekennzeichnet, dass** es den Schritt des Zurückweisens einer neuen Verbindung, die in das Netz (10, 20, 30) einzutreten versucht, umfasst, wenn gefunden wird, dass die neue Verbindung Kollisionen und/oder Überlastung und/oder anormale Verzögerung verursachen kann.

**18.** Verfahren nach Anspruch 1 oder 17, **dadurch gekennzeichnet, dass** es vor dem Zulassen einer neuen Verbindung, die in das Netz (10, 20, 30) einzutreten versucht, die Schritte des Simulierens des an die neue Verbindung vergebenen Routing und des Aktualisierens (180) der Netzparameter, um zu verifizieren, ob der jeweilige neue Pfad machbar ist oder irgendwelche Kollisionen auftreten können, umfasst.

19. Verfahren nach Anspruch 18, **dadurch gekennzeichnet, dass**, wenn ein machbarer Pfad für eine neue Verbindung, die in das Netz (10, 20, 30) einzutreten versucht, gefunden wird, es die Schritte des Sendens einer Routenwiederabspielnachricht zu einer Menge von Knoten in dem machbaren Pfad umfasst, die die an die neue Verbindung vergebene Kennung und/oder den Quellenknoten (s) und/oder den Zielknoten (d) und/oder den nächsten zu verwendenden Sprung spezifiziert.

20. Verfahren nach einem der vorhergehenden Ansprüche, **dadurch gekennzeichnet, dass** die Flüsse in dem Netz (10, 20, 30) Datenpakete umfassen, und dass das Verfahren den Schritt des separaten Behandelns von zu verschiedenen Verbindungen gehörenden Paketen auch dann, wenn Verbindungen denselben Quellenknoten (s) und/oder denselben Zielknoten (d) aufweisen, umfasst.

21. Verfahren nach einem der vorhergehenden Ansprüche, **dadurch gekennzeichnet, dass** das Verfahren den Schritt des Berücksichtigens der Parameter der Quelle (s) und des Ziels (d) aller Verbindungen in dem Netz (10, 20, 30) auf Ende-zu-Ende-Basis umfasst.

22. System zum Steuern von Routingoperationen in einem Netz, das Knoten (10, 20, 30) enthält, die für Mehrsprungkommunikation in Form von unabhängigen Verbindungen über die Knoten (10, 20, 30) verbindende drahtlose Strekken ausgelegt sind, wobei jeder der Knoten eine Menge von benachbarten Knoten aufweist und an einen beabsichtigten benachbarten Knoten gerichtete Übertragungen von einem gegebenen Knoten auch von mindestens einem nichtbeabsichtigten benachbarten Knoten empfangen werden, wobei mindestens einer der Knoten dafür ausgelegt ist, Routingoperationen durch Ausführen einer Pfadsuche (120), an der die Knoten in dem Netz beteiligt sind, die dafür ausgelegt sind, eine gegebene Güteanforderung der Verbindungen zu unterstützen, zu verwalten, wobei der mindestens eine verwaltende Knoten (BS, AP) dafür ausgelegt ist, das Verfahren nach einem der Ansprüche 1 bis 21 auszuführen.

23. Computerprogrammprodukt, das in den Speicher mindestens eines Computers ladbar ist und Softwarecodeteile zum Ausführen der Schritte des Verfahrens nach einem der Ansprüche 1 bis 21, wenn das Produkt auf einem Computer ausgeführt wird, umfasst.

**Revendications**

1. Un procédé de contrôle d'opérations d'acheminement dans un réseau comprenant des noeuds (10, 20, 30) configuré pour une communication à sauts multiples sous la forme de connexions indépendantes passant par des liaisons sans fil reliant lesdits noeuds (10, 20, 30), dans lequel chacun desdits noeuds possède un ensemble de noeuds voisins et des transmissions d'un noeud donné dirigées vers un noeud voisin visé sont également reçues par au moins un noeud voisin non visé, dans lequel au moins un desdits noeuds est configuré de façon à gérer des opérations d'acheminement par l'exécution d'une recherche de chemins (120) impliquant les noeuds du réseau adaptés de façon à prendre en charge une exigence de qualité donnée desdites connexions, le procédé comprenant les étapes suivantes :

  - la détermination de la capacité exploitée sur les liaisons existantes impliquant un noeud donné (j),
  - la détermination pour chacun des noeuds du réseau qui sont des noeuds voisins dudit noeud donné (j), d'une capacité respective exploitée sur des liaisons existantes impliquant chacun desdits noeuds voisins autres que lesdites liaisons existantes impliquant ledit noeud donné (j),
  - la découverte du maximum de ladite capacité respective sur lesdits noeuds du réseau qui sont des noeuds voisins dudit noeud donné (j), et
  - l'inclusion dudit noeud donné (j) dans ladite recherche de chemins (120) uniquement si la somme de ladite capacité et dudit maximum ne dépasse pas un seuil donné (Ci).

2. Le procédé selon la revendication 1, **caractérisé en ce que** ledit seuil donné ($C_i$) est sélectionné sous la forme d'une fonction de la capacité théorique exploitable sur la totalité desdites liaisons.

3. Le procédé selon l'une quelconque des revendications 1 ou 2, **caractérisé en ce que** lesdites opérations d'acheminement comprennent un mécanisme d'acheminement indépendant des technologies de niveau d'accès et radio spécifiques utilisées sur lesdites liaisons sans fil dudit réseau (10, 20, 30).

4.  Le procédé selon l'une quelconque des revendications précédentes, **caractérisé en ce qu'**il comprend l'étape d'association de poids auxdites liaisons sans fil dudit réseau (10, 20, 30), grâce à quoi un équilibrage de charge automatique est obtenu sur ledit réseau (10, 20, 30) par l'intermédiaire de ladite recherche de chemins (120).

5.  Le procédé selon l'une quelconque des revendications précédentes, **caractérisé en ce que** ladite recherche de chemins (120) s'applique uniquement à un sous-graphe de la topologie dudit réseau (10, 20, 30) de façon à garantir une bande passante demandée (rb) d'une connexion entrante.

6.  Le procédé selon l'une quelconque des revendications précédentes, **caractérisé en ce qu'**il comprend les étapes suivantes :

    - l'utilisation en tant que mesure dans ladite recherche de chemins (120) d'un indicateur de la saturation desdites liaisons sans fil, et
    - la sélection, parmi une pluralité de chemins réalisables identifiés par ladite recherche, du chemin le moins chargé desdits chemins réalisables en fonction de ladite mesure.

7.  Le procédé selon l'une quelconque des revendications précédentes, **caractérisé en ce que**, si aucun chemin d'acheminement réalisable n'est trouvé à l'issue de ladite recherche de chemins (120), il comprend l'étape d'exécution d'une procédure d'optimisation (140) dudit réseau (10, 20, 30) afin de vérifier la possibilité de réacheminer des connexions existantes afin d'admettre une nouvelle connexion tout en prenant en charge ladite exigence de qualité donnée pour toutes les connexions dudit réseau (10, 20, 30).

8.  Le procédé selon la revendication 7, **caractérisé en ce qu'**il comprend l'étape de réacheminement desdites connexions existantes uniquement si ledit réacheminement admet de manière effective ladite nouvelle connexion, dans le cas contraire, aucun changement d'acheminement n'a lieu sur ledit réseau (10, 20, 30).

9.  Le procédé selon l'une quelconque des revendications 7 ou 8, **caractérisé en ce que** ladite procédure d'optimisation (140) sélectionne une connexion qui n'a pas encore été sélectionnée et qui virtuellement modifie les paramètres dudit réseau (10, 20, 30) comme si ladite connexion sélectionnée n'existait pas, annulant ainsi les effets de la connexion sélectionnée d'une copie temporaire des paramètres de réseau.

10. Le procédé selon la revendication 7, **caractérisé en ce que**, si la connexion sélectionnée ne peut pas être réacheminée, ladite procédure d'optimisation (140) réinitialise sa structure d'information temporaire, marque la connexion comme sélectionnée et ensuite sélectionne une nouvelle connexion destinée à être possiblement réacheminée.

11. Le procédé selon l'une quelconque des revendications 9 ou 10, **caractérisé en ce qu'**il comprend l'étape d'association de poids audites liaisons sans fil dudit réseau (10, 20, 30), produisant ainsi une matrice de poids, et ladite procédure d'optimisation (140) comprend les étapes suivantes :

    - la sélection, parmi une pluralité de connexions actuellement acheminées, d'une connexion qui n'a pas encore été sélectionnée,
    - la recherche pour ladite connexion sélectionnée d'un chemin différent du chemin actuel par un réglage sur l'infini dans ladite copie temporaire de ladite matrice de poids des poids associés aux liaisons impliquant des noeuds dans ledit chemin actuel autres que les noeuds source (s) et destination (d).

12. Le procédé selon la revendication 9, **caractérisé en ce que**, si une connexion sélectionnée peut être réacheminée par un nouveau chemin réalisable, ladite procédure d'optimisation (140) actualise les paramètres de réseau de sa copie temporaire et la recherche de chemins est relancée pour la nouvelle connexion, et ensuite le réacheminement a effectivement lieu sur le réseau (10, 20, 30) si ladite recherche de chemins aboutit.

13. Le procédé selon la revendication 7, **caractérisé en ce que**, si une connexion sélectionnée peut être réacheminée par un nouveau chemin réalisable, ladite recherche est exécutée (190) pour ladite nouvelle connexion.

14. Le procédé selon l'une quelconque des revendications précédentes, **caractérisé en ce que** ledit paramètre de qualité donné est une bande passante demandée (rb).

**15.** Le procédé selon l'une quelconque des revendications précédentes, **caractérisé en ce que** lesdites opérations d'acheminement impliquant une recherche (120) pour un chemin d'acheminement réalisable pour une connexion possédant une bande passante demandées ($\tilde{b}$) normalisée sur la bande passante de canal d'un noeud source (s) vers un noeud de destination (d), dans lequel le procédé comprend l'étape de détermination si un noeud donné (k) doit être sélectionné ou rejeté de ladite recherche de chemins (120) lorsque le noeud effectif sélectionné par ladite recherche de chemins (120) est un noeud donné (j) voisin dudit noeud donné (k), par :

- i) le rejet immédiat dudit noeud donné (j) et le refus de la connexion si ledit noeud donné est le noeud source (s) et ne possède pas une bande passante de transmission disponible (freetx(j)) au moins égale à ladite bande passante normalisée demandée ($\tilde{b}$),
- ia) si ledit noeud donné (j) est le noeud source (s) et n'a pas été immédiatement rejeté, la vérification si ledit noeud donné (j) peut prendre en charge ladite connexion par :

- la vérification que, si le noeud donné (k) n'est pas ledit noeud de destination (d) et grâce à quoi ledit noeud (k) transmettra soit vers ledit noeud de destination (d) ou vers un saut suivant vers ledit noeud de destination (d), la condition *usedband*(j) $+2\tilde{b} > 1$ est satisfaite, où *usedband*(j) désigne la bande passante de transmission normalisée utilisée par ledit nceud donné et $\tilde{b}$ est ladite bande passante normalisée demandée, et
- le refus de ladite connexion si ladite condition est satisfaite,

- ii) si ladite condition n'est pas satisfaite et ladite connexion n'est pas refusée, vérifier si ledit autre noeud (k) est ledit noeud de destination (d) et, si c'est le cas, ledit noeud donné (K) est sélectionné pour l'itération suivante de ladite recherche de chemins (120),
- iiia) si ledit noeud donné (j) n'est pas ledit noeud source (s) et ledit noeud donné (k) n'est pas ledit noeud de destination (d), vérifier si ledit autre noeud (k) peut être sélectionné pour ladite recherche en vérifiant si la bande passante de transmission disponible (*freetx*(k)) dudit autre noeud (k) est inférieure à ladite bande passante normalisée demandée ($\tilde{b}$), et le rejet dudit autre noeud (k) de la recherche si ladite condition est satisfaite,
- iiib) si ladite condition n'est pas satisfaite et ledit autre noeud (k) n'est pas rejeté, vérifier si au moins un noeud voisin commun existe pour ledit noeud donné (j) et ledit autre noeud (k) adapté de façon à recevoir des transmissions provenant dudit noeud donné (j) et dudit noeud donné (k) avec ladite bande passante normalisée demandée ($\tilde{b}$), et le rejet dudit autre noeud (k) de la recherche si un tel noeud voisin commun est déterminé exister et ne possède pas une capacité suffisante pour recevoir des transmissions provenant dudit noeud donné (j) et dudit noeud donné (k),
- iiic) si ledit autre noeud (k) n'est pas rejeté, vérifier si ledit autre noeud (k) est un noeud voisin dudit noeud de destination (d),

- si ledit autre noeud (k) est un noeud voisin dudit noeud de destination (d), vérifier si la condition *usedband*(k)$+2\tilde{b} \leq 1$ est satisfaite, où *usedband*(k) désigne la bande passante de transmission normalisée utilisée par ledit autre noeud (k) et $\tilde{b}$ est ladite bande passante normalisée demandée,
- la sélection et le rejet dudit autre noeud (k) si ladite condition est satisfaite ou non satisfaite respectivement, et
- si ledit autre noeud (k) n'est pas un noeud voisin dudit noeud de destination (d), vérifier si la condition *usedband*(k)$+3\tilde{b} \leq 1$ est satisfaite, où *usedband*(k) désigne la bande passante de transmission normalisée utilisée par ledit autre noeud (k) et $\tilde{b}$ est ladite bande passante normalisée demandée,
- la sélection et le rejet dudit autre noeud (k) si ladite condition est satisfaite ou non satisfaite respectivement.

**16.** Le procédé selon l'une quelconque des revendications précédentes, **caractérisé en ce qu'**il comprend des fonctionnalités de contrôle d'admission d'appel (CAC) (130) afin de préserver la prise en charge de ladite exigence de qualité donnée pour les connexions existants déjà dans ledit réseau (10, 20, 30) par le refus de l'admission audit réseau (10, 20, 30) d'une connexion donnée si ni ladite recherche de chemins (120) ni ladite procédure d'optimisation (140) ne sont en mesure de définir un chemin réalisable.

**17.** Le procédé selon la revendication 1, **caractérisé en ce qu'**il comprend l'étape de rejet d'une nouvelle connexion cherchant à entrer dans ledit réseau (10, 20, 30) si ladite nouvelle connexion est déterminée capable de causer au moins l'une des conséquences parmi collisions, surcharge et retard anormal.

**18.** Le procédé selon l'une quelconque des revendications 1 ou 17, **caractérisé en ce qu'**il comprend, avant d'admettre une nouvelle connexion cherchant à entrer dans ledit réseau (10, 20, 30), les étapes de simulation de l'acheminement attribué à ladite nouvelle connexion et l'actualisation (180) des paramètres de réseau afin de vérifier si le nouveau chemin respectif est réalisable ou si des collisions peuvent se produire.

19. Le procédé selon la revendication 18, **caractérisé en ce que**, si un chemin réalisable est trouvé pour une nouvelle connexion cherchant à entrer dans ledit réseau (10, 20, 30), il comprend les étapes d'envoi d'un message de répétition de chemin vers un ensemble de noeuds dans ledit chemin réalisable spécifiant au moins un des identifiants attribués à la nouvelle connexion, le noeud source (s), le noeud de destination (d) et le saut suivant à utiliser.

20. Le procédé selon l'une quelconque des revendications précédentes, **caractérisé en ce que** lesdits flux dans ledit réseau (10, 20, 30) comprennent des paquets de données et **en ce que** le procédé comprend l'étape de traitement de paquets appartenant à des connexions différentes séparément, même si les connexions possèdent le même noeud source (s) et/ou le même noeud de destination (d).

21. Le procédé selon l'une quelconque des revendications précédentes, **caractérisé en ce que** le procédé comprend l'étape de prise en compte, sur une base de bout en bout, des paramètres de source (s) et de destination (d) de toutes les connexions dudit réseau (10, 20, 30).

22. Un système de contrôle d'opérations d'acheminement dans un réseau comprenant des noeuds (10, 20, 30) configuré pour une communication à sauts multiples sous la forme de connexions indépendantes passant par des liaisons sans fil reliant lesdits noeuds (10, 20, 30), dans lequel chacun desdits noeuds possède un ensemble de noeuds voisins et des transmissions d'un noeud donné dirigées vers un noeud voisin visé sont également reçues par au moins un noeud voisin non visé, dans lequel au moins un desdits noeuds est configuré de façon à gérer des opérations d'acheminement par l'exécution d'une recherche de chemins (120) impliquant les noeuds du réseau adaptés de façon à prendre en charge une exigence de qualité donnée desdites connexions, dans lequel ledit au moins un noeud de gestion (BS, AP) est configuré de façon à exécuter le procédé selon l'une quelconque des revendications 1 à 21.

23. Un programme informatique, pouvant être chargé dans la mémoire d'au moins un ordinateur et contenant des parties de code logiciel destinées à exécuter les étapes du procédé selon l'une quelconque des revendications 1 à 21 lorsque ce programme est exécuté sur un ordinateur.

# Fig_1

# Fig_2

# Fig_3

# Fig.4

```
                                    100
                                  ╭─╯
                              ┌──────────┐
                              │  start   │
                              └──────────┘
                                    │
                                    ▼            110
                              ┌──────────────┐ ╭─╯
                              │route request from│
                              │s to d with req   │
                              │bandwidth rb      │
                              └──────────────┘
                                    │
                                    ▼            120
                              ┌──────────────┐ ╭─╯
                              │route search  │
                              │   routine    │
                              └──────────────┘
                                    │
                                    ▼
              130 ╮            ◇ exists
                  ╰──────────  feasible
                                route?  ◇──────────
                                    │              │
                                   NO             YES
          140 ╮                     │              │
              ╰──────  ┌──────────────┐            │
                       │optimization  │            │
                       │  routine     │            │
                       └──────────────┘            │
                                    │              │
    160 ╮                           ▼   150        │
        ╰──────┐            ◇ exists ╮              │
┌──────────────────┐  NO   feasible ╯              │
│new flow rejected │◄─────  route? ◇               │
└──────────────────┘                │              │
        │                          YES    170      │
        │                           │      ╭─╯      │
        │                           ▼               ▼
        │                  ┌──────────────┐
        │                  │new flow admitted│
        │                  │in the network   │
        │                  └──────────────┘
        │                           │
        │                           ▼            180
        │                  ┌──────────────┐    ╭─╯
        │                  │network parameters│
        │                  │update routine    │
        │                  └──────────────┘
        │                           │
        │                           ▼            190
        │                  ┌──────────────┐    ╭─╯
        │                  │scheduling routine│
        │                  │(if tdma mac is   │
        │                  │   used)          │
        │                  └──────────────┘
        │                           │
        │                           ▼
        └──────────────►  ┌──────────┐
                          │   end    │   200
                          └──────────┘  ╭─╯
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030202476 A
- WO 03028315 A
- US 20020145978 A

- US 2002080790 A
- US 2001006522 A
- US 5872773 A


### Non-patent literature cited in the description

- **M.T. Islam ; P. Thulasiraman ; R.K. Thulasiram.** A parallel and colonization algorithm for all-pair routing in MANETs. *IEEE Proceedings of the international parallel and distributed processing symposium,* 2003
- **M. Minematsu et al.** An efficient route discovery scheme using routing history in ad-hoc networks. *IEEE Proceedings of the 27th annual conference on local computer network,* 2002
- **S. Roy ; J.J. Garcia-Luna-Aveces.** Using minimal source trees for on-demand routing in ad-hoc networks. *IEEE Infocom,* 2001
- **I. Rubin et al.** A mobile-backbone protocol for ad-hoc wireless networks. *IEEE Aerospace Conference Proceedings,* 2002, vol. 6, 2727-2740
- **M. Spohn ; J.J. Garcia-Luna-Aveces.** Neighborhood aware source routing. *MobiHOC,* 2001
- **J. Tian ; L. Han ; K. Rothermel.** Spatially aware routing for mobile ad-hoc inter-vehicle radio networks. *IEEE 6th International Conference on Intelligent Transportation Systems (ITSC),* 2003
- **X. Cheng ; D. Du.** Virtual backbone-based routing in multi-hop ad-hoc wireless networks. *Technical Report*
- **M. Gerla ; T.J. Kwon ; G. Pei.** On demand routing in large ad-hoc wireless networks with passive clustering. *Proceedings of IEEE WCNC,* 2000
- **H. Li ; D. Yu.** Performance Comparison of ad-hoc and cellular based routing algorithms in multi-hop cellular networks. *IEEE WPMC,* October 2002
- **S. Chakrabarti ; A. Mishra.** QoS issues in ad-hoc wireless networks. *IEEE Communications Magazine,* February 2001
- **C. R. Lin ; J. S. Liu.** QoS routing in ad-hoc wireless networks. *IEEE Journal On Selected Areas In Communications,* August 1999, vol. 17 (8
- **C.Zhu ; M. S. Corson.** QoS routing for mobile ad-hoc networks. *IEEE INFOCOM,* 2002
- **S. Chen ; K. Nahrstedt.** Distributed quality of service routing in ad-hoc networks. *IEEE Journal On Selected Areas In Communications,* August 1999, vol. 17 (8

- **Ananthapadmanabha R. ; B. S. Manoj ; C. Siva Ram Murthy.** Multi-hop cellular networks: the architecture and routing protocols. *Proc. PIMRC,* 2001
- **I. F. Akyildiz ; W. Yen ; B. Yener.** A new hierarchical protocol for dynamic multi-hop wireless networks. *Proc. IEEE INFOCOM,* April 1997
- **Y. D. Lin ; Y. C. Hsu.** Multi-hop cellular: a new architecture for wireless communication. *IEEE INFOCOM,* 2000
- **H. Li ; M. Lott ; M. Weckerle ; W. Zirwas ; E. Schulz.** Multi-hop communications in future mobile radio networks. *WPMC,* October 2002
- **M. Lott ; M. Weckerle ; W. Zirwas ; H.Li ; E, Schulz.** Hierarchical Cellular Multi-hop Networks. *EPMCC,* March 2003
- **H. Lou et al.** UCAN: a unified cellular and ad-hoc network architecture. *MobiCom,* 2003
- **M. J. Miller ; W. D. List ; N. H. Vaidya.** A hybrid network implementation to extend infrastructure reach. *Tech Report,* 2003
- **C. Qiao ; H. Wu.** iCAR: an integrated cellular and ad-hoc relay system. *Intel Conf. on Computer Communications and Networks (IC3N),* 2000
- **R. B. Walke et al.** Relay-based deployment concepts for wireless and mobile broadband cellular radio. *Paper proposal for IEEE communications magazine,* August 2003
- **C.H. Yeh.** ACENET: architectures and protocols for high throughput, low power, and QoS provisioning in next-generation mobile communications. *Proc. IEEE Intel Symp. Personal, Indoor, and Mobile Radio Communications,* 2002, 779-786
- **B. H. Walke ; R. Pabst ; D. Schultz.** A mobile broadband system based on fixed wireless routers. *Proceedings of ICCT,* 2003
- **A. N. Zadeh et al.** Self-organizing packet radio ad-hoc networks with overlay. *IEEE Communications Magazine,* June 2002